# EUROPEAN PATENT SPECIFICATION

(11) **EP 4 327 505 B1**
(45) Date of publication and mention of the grant of the patent: **25.02.2026**
(21) Application number: 22725336.6
(22) Date of filing: 28.04.2022
(51) Int. Cl.: H04L 9/08, H04L 9/40

(54) **METHODS AND APPARATUS FOR PROVISIONING, AUTHENTICATION, AUTHORIZATION, AND USER EQUIPMENT (UE) KEY GENERATION AND DISTRIBUTION IN AN ON-DEMAND NETWORK**
VERFAHREN UND VORRICHTUNG ZUR BEREITSTELLUNG, AUTHENTIFIZIERUNG, AUTORISIERUNG UND BENUTZERGERÄTESCHLÜSSELERZEUGUNG UND -VERTEILUNG IN EINEM ON-DEMAND-NETZWERK
PROCÉDÉS ET APPAREIL DE FOURNITURE, D'AUTHENTIFICATION, D'AUTORISATION ET GÉNÉRATION ET DISTRIBUTION DE CLÉ D'ÉQUIPEMENT D'UTILISATEUR (EU) DANS UN RÉSEAU À LA DEMANDE

(30) Priority: 07.05.2021 US 202163185826 P; 07.05.2021 US 202163185837 P
(43) Date of publication of application: 28.02.2024
(73) Proprietor: Huawei Technologies Co., Ltd., Longgang Shenzhen, Guangdong 518129 (CN)
(72) Inventor: WONG, Marcus, Green Brook, New Jersey 08812 (US); JOHN, Kaippallimalil Mathew, Carrollton, Texas 75010 (US); SABOORIAN, Khosrow Tony, Plano, Texas 75093 (US); XIANG, Zhixian, Frisco, Texas 75035 (US)
(74) Representative: Epping - Hermann - Fischer
(86) International application number: PCT/US2022/026675
(87) International publication number: WO 2022/147582

(56) References cited:
- US-A1- 2015 237 071
- US-A1- 2021 029 489
- US-B2- 10 623 497
- US-B2- 8 683 562

## Description

### TECHNICAL FIELD

The present disclosure relates generally to methods and apparatus for wireless communications, and, in particular embodiments, to methods and apparatus for Provisioning, Authentication, Authorization, and User Equipment (UE) Key Generation and Distribution in an On-Demand Network.

### BACKGROUND

Wireless networks, as part of evolving services ecosystem, need to evolve to satisfy various new emerging applications or services. The 3GPP SA1 WG has started a new study on on-demand networks. On-demand networks include Personal Internet of Things (IoT) networks (PINs). A PIN is similar to a very small private network but can be deployed in a more dynamic and flexible way. Most PINs can be deployed in a home or a small enterprise venue for consumer IoT devices, such as home automation, wearable devices, meters, etc., and be setup quickly for deployments having a duration of a short period time. PINs and on-demand networks allow UEs from different operators to join. The UE owners may be either friends to one another or are part of a consortium. However, mechanisms to authenticate and authorize the UEs quickly and automatically for the UEs to access an on-demand network are lacking. Furthermore, currently on-demand networks do not support UEs from different operators to communicate securely with the on-demand network or communicate with other UEs in the on-demand network.

US 2018/159958 A1 discloses a secure and automated system that can be used to provision devices with configuration information. A temporary connection can be used to access configuration information from a cloud server. A unique device ID can be provided to the cloud server and the configuration information downloaded to the device. A wireless network ID and password can be downloaded to configure the device for a wireless network.

US 2015/237071 A1 discloses systems and methods for managing connected devices and associated network connections. Trust, privacy, safety, and/or security of information communicated between connected devices may be established in part through use of security associations and/or shared group tokens. These security associations may be used to form an explicit private network associated with the user. A user may add and/or manage devices included in the explicit private network through management of various security associations associated with the network's constituent devices.

US 2021/029489 A1 discloses a lock system that includes a plurality of electronic locking devices and a server. The server is configured to receive lock location data regarding a location of each of the plurality of electronic locking devices, receive user device location data regarding a current location of each of a plurality of user devices, deliver access credentials to each of the plurality of user devices according to a geofence delivery protocol based on the lock location data and the user device location data, monitor a current aggregate loading in response to using the geofence delivery protocol, and deliver access credentials to one or more of the plurality of user devices according to a non-geofence delivery protocol in response to the current aggregate loading exceeding a load threshold.

### SUMMARY

Technical advantages are generally achieved, by embodiments of this disclosure which describe methods and apparatus for provisioning, authentication, authorization, and user equipment (UE) key generation and distribution in an on-demand network. The invention is defined by the appended independent claims. Advantageous embodiments of the invention are defined by the appended dependent claims.

According to examples, a user equipment (UE) receives an access credential message. The access credential message indicates an access credential for an on-demand network for the UE to access. The access credential message further indicates a limited lifespan of the access credential. The UE transmits, to the on-demand network, an authentication and authorization request. The authentication and authorization request includes information about the access credential. The UE receives, from the on-demand network, an authentication and authorization response. The UE establishes a session with the on-demand network based on the authentication and authorization response.

In some examples, the on-demand network may belong to an operator different from a home operator of the UE. In some examples, the access credential message may further include entity information indicating one or more entities performing authentication and authorization. The authentication and authorization request may include the entity information. In some examples, the one or more entities may include at least one of an entity of the on-demand network, an application server whose one or more services are used by UEs via accessing the on-demand network, a third party entity, or an entity of a home network of the UE. In some examples, the entity information may indicate a first entity processing the authentication and a second entity processing the authorization. The second entity may be different from the first entity. In some examples, the access credential message may further indicate a credential type and a credential owner. The credential owner may be one of the on-demand network, an application server whose one or more services are used by UEs via accessing the on-demand network, a third party entity, or a home network of the UE. In some examples, the UE may receive the access credential message in response to the UE authenticating with a home network of the UE or the UE authenticating with an application server whose one or more services are used by UEs via accessing the on-demand network. The UE may receive the access credential message before or during the UE accessing to the on-demand network. In some examples, the UE may receive the access credential message from a home network of the UE or from an application server whose one or more services are used by UEs via accessing the on-demand network without the UE requesting to obtain the information about the access credential to access the on-demand network. In some examples, the UE may receive the access credential message from a home network of the UE or from an application server whose one or more services are used by UEs via accessing the on-demand network with the UE requesting to obtain the information about the access credential to access the on-demand network. In some examples, the information about the access credential may include the access credential or an identifier of the access credential.

According to examples, a network entity of an on-demand network receives an authentication and authorization request including information about an access credential. The UE receives an access credential message indicating the access credential for the on-demand network for the UE to access. The access credential message further indicates a limited lifespan of the access credential. The network entity transmits to the UE an authentication and authorization response. The network entity establishes a session with the UE based on the authentication and authorization response.

In some examples, the on-demand network may belong to an operator different from a home operator of the UE. In some examples, the access credential message may further include entity information indicating one or more entities performing authentication and authorization. The authentication and authorization request may include the entity information. In some examples, the one or more entities may include at least one of the entity of the on-demand network, an application server whose one or more services are used by UEs via accessing the on-demand network, a third party entity, or an entity of a home network of the UE. In some examples, the entity information may indicate a first entity processing the authentication and a second entity processing the authorization. The second entity may be different from the first entity. In some examples, the access credential message may further indicate a credential type and a credential owner. The credential owner may be one of the on-demand network, an application server whose one or more services are used by UEs via accessing the on-demand network, a third party entity, or a home network of the UE. In some examples, the UE may receive the access credential message in response to the UE authenticating with a home network of the UE or the UE authenticating with an application server whose one or more services are used by UEs via accessing the on-demand network. The UE may receive the access credential message before or during the UE accessing to the on-demand network. In some examples, the UE may receive the access credential message from a home network of the UE or from an application server whose one or more services are used by UEs via accessing the on-demand network without the UE requesting to obtain the information about the access credential to access the on-demand network. In some examples, the UE may receive the access credential message from a home network of the UE or from an application server whose one or more services are used by UEs via accessing the on-demand network with the UE requesting to obtain the information about the access credential to access the on-demand network. In some examples, the information about the access credential may include the access credential or an identifier of the access credential.

According to examples, a user equipment (UE) receives, from an on-demand network, key information about at least one key set. The at least one key set is generated based on information of the on-demand network and an access credential used by the UE to access the on-demand network and an access credential used by the UE to access the on-demand network. The at least one key set may comprise a first key set, and the first key set may comprise a first key pair including a first cipher key (CK) and a first integrity key (IK). The UE communicates with the on-demand network and other UEs within the on-demand network using the first key set.

In some examples, the on-demand network may belong to an operator different from a home operator of the UE. In some examples, the key information about the at least one key set may include the at least one key set, or the key information about the at least one key set may include at least one parameter used by the UE to generate the at least one key set. In some examples, the at least one parameter may include parameters for the UE to generate a new fresh key, the parameters include a random number generated by the on-demand network as a nonce. In some examples, a public key may be provided by the on-demand network, a home network of the UE, or an application server whose one or more services are used by UEs via accessing the on-demand network. In some examples, the at least one parameter may include a limited lifespan of the at least one key set. The limited lifespan may include at least one of a start time or an end time. In some examples, the UE may send a refresh request to the on-demand network before receiving a refresh message. In some examples, the key information may further indicate a limited lifespan of the at least one key set. In some examples, the first key pair in the first key set may be used by the UE to communicate with a control plane of the on-demand network. The first key set may further comprise a second key pair including a second CK and a second IK used by the UE to communicate with a data plane of the on-demand network. In some examples, the at least one key set may further comprise a third key set including a third CK and a third IK used by the UE for group communications within the on-demand network, the third key set being group specific. The at least one key set further comprising a fourth key set including a fourth CK and a fourth IK used by the UE to communicate with a second UE in the on-demand network. In some examples, the UE may receive a key refresh message including refresh information for refreshing the at least one key set. The key refresh message may be encrypted and integrity checked using the first key set. The key refresh message may include at least one new key set, or the key refresh message may include at least one refresh parameter for the UE generate the at least one new key set. The UE may communicate with the on-demand network using the at least one new key set. In some examples, before receiving the key information, the UE may transmit to the on-demand network an authentication and authorization request including information about the access credential. The authentication and authorization request may further include a public key of the UE. The key information about the at least one key set may be encrypted by the on-demand network using the public key. The UE may decrypt the key information about the at least one key set using a private key of the UE.

According to examples, a network entity of an on-demand network transmits to a user equipment (UE) key information about at least one key set. The at least one key set is generated based on information of the on-demand network and an access credential used by the UE to access the on-demand network and an access credential used by the UE to access the on-demand network. The at least one key set may comprise a first key set, and the first key set may comprise a first key pair including a first cipher key (CK) and a first integrity key (IK). The network entity communicates with the UE using the first key set.

In some examples, the on-demand network may belong to an operator different from a home operator of the UE. In some examples, the key information about the at least one key set may include the at least one key set, or the key information about the at least one key set may include at least one parameter used by the UE to generate the at least one key set. In some examples, the at least one parameter may include parameters for the UE to generate a new fresh key, the parameters include a random number generated by the on-demand network as a nonce. In some examples, a public key may be provided by the on-demand network, a home network of the UE, or an application server whose one or more services are used by UEs via accessing the on-demand network. In some examples, the at least one parameter may include a limited lifespan of the at least one key set. The limited lifespan may include at least one of a start time or an end time. In some examples, the UE may send a refresh request to the on-demand network before receiving a refresh message. In some examples, the key information may further indicate a limited lifespan of the at least one key set. In some examples, the first key pair in the first key set may be used by the UE to communicate with a control plane of the on-demand network. The first key set may further comprise a second key pair including a second CK and a second IK used by the UE to communicate with a data plane of the on-demand network. In some examples, the at least one key set may further comprise a third key set including a third CK and a third IK used by the UE for group communications within the on-demand network, the third key set being group specific. The at least one key set further comprising a fourth key set including a fourth CK and a fourth IK used by the UE to communicate with a second UE in the on-demand network. In some examples, the UE may receive a key refresh message including refresh information for refreshing the at least one key set. The key refresh message may be encrypted and integrity checked using the first key set. The key refresh message may include at least one new key set, or the key refresh message may include at least one refresh parameter for the UE generate the at least one new key set. The UE may communicate with the on-demand network using the at least one new key set. In some examples, before receiving the key information, the UE may transmit to the on-demand network an authentication and authorization request including information about the access credential. The authentication and authorization request may further include a public key of the UE. The key information about the at least one key set may be encrypted by the on-demand network using the public key. The UE may decrypt the key information about the at least one key set using a private key of the UE.

Examples in this disclosure provide mechanisms to authenticate and authorize the UEs quickly and automatically for the UEs to access an on-demand network. In addition, examples in this disclosure support UEs from different operators to communicate securely with the on-demand network or communicate with other UEs in the on-demand network.

### BRIEF DESCRIPTION OF THE DRAWINGS

For a more complete understanding of the present disclosure, and the advantages thereof, reference is now made to the following descriptions taken in conjunction with the accompanying drawings, in which.
FIG. 1 illustrates an example communication system with two on-demand PINs, according to some examples;
FIG. 2 illustrates a message flow of access credential provisioning, authentication, and authorization by the UE's home network operated by the UE's home operator, according to some examples;
FIG. 3 illustrates a message flow of access credential provisioning, authentication, and authorization by the on-demand network, according to some examples;
FIG. 4 illustrates a message flow of access credential provisioning, authentication, and authorization by the application server, according to some examples;
FIG. 5 illustrates a message flow of access credential provisioning, authentication, and authorization by the third party entity, according to some examples;
FIG. 6 illustrates a message flow of the on-demand network key generation and distribution, according to some examples;
FIG. 7 illustrates a message flow for an on-demand network key refresh using network generated keys, according to some examples;
FIG. 8 illustrates a message flow for an on-demand network key refresh using keys generated by the UE, according to some examples;
FIG. 9A illustrates a flowchart of a method for access credential provisioning, authentication, and authorization, according to some examples;
FIG. 9B illustrates a flowchart of a method for access credential provisioning, authentication, and authorization, according to some examples;
FIG. 10A illustrates a flowchart of a method for the on-demand network key generation and distribution, according to some embodiment;
FIG. 10B illustrates a flowchart of a method for the on-demand network key generation and distribution, according to some embodiment;
FIG. 11 illustrates an example communication system, according to some embodiment;
FIG. 12A and 12B illustrate example devices, according to some embodiment;
FIG. 13 is a block diagram of an example computing system, according to some embodiment;
FIG. 14 illustrates an example communications system, according to some examples.

### DETAILED DESCRIPTION OF ILLUSTRATIVE EMBODIMENTS

The structure and use of disclosed examples are discussed in detail below. It should be appreciated, however, that the present disclosure provides many applicable concepts that can be embodied in a wide variety of specific contexts. The specific examples discussed are merely illustrative of specific structure and use of examples, and do not limit the scope of the disclosure.

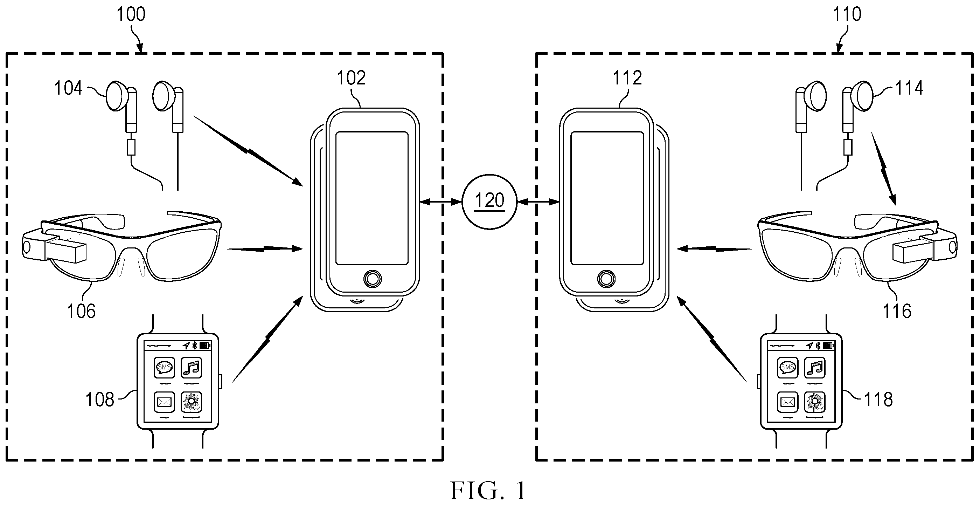

FIG. 1 illustrates an example communication system with two on-demand PINs 100 and 110, according to some examples. Each of the two on-demand PINs 100 and 110 includes different mobile devices (e.g., user equipments (UEs)) that are connected with each other within the respective PIN for a short period time (e.g. playing a game). For example, on-demand PIN 100 may include mobile phone 110, wearable device 104 (e.g., wireless earbuds), wearable device 106 (e.g., wireless goggles), and wearable device 108 (e.g., wireless watch) that are connected with each other within on-demand PIN 100 for a short period time. On-demand PIN 110 may include mobile phone 112, wearable device 114 (e.g., wireless earbuds), wearable device 116 (e.g., wireless goggles), and wearable device 118 (e.g., wireless watch) that are connected with each other within on-demand PIN 110 for a short period time. One or more wireless devices in each of the on-demand PINs 100 and 110 may also be connected to network 120 (e.g., a public-line-mobile network such as a 5G wireless network or a 4G LTE network).

The 3GPP SA1 accepted a new use case on the dynamic establishment of an on-demand PIN at home during the PIN study phase in TR 22.859 (3GPP Study on Personal IoT Networks), which is hereby incorporated herein by reference in its entirety. With the deployment of PINs and the support of the mobile operators to use this as a new added value service, authorized mobile devices, such as smartphones, tablets, customer premise equipments (CPEs) can be also used as a PIN gateway to dynamically create and manage an on-demand temporary PIN. An on-demand temporary PIN will not only provide connectivity to the devices in proximity, but also provide more flexibility and authority to the PIN-user to manage the PIN, including deciding which devices can be connected into the PIN, managing the service and the traffic within the PIN, and so on. The PIN user can request the public-line-mobile network (PLMN) to create an on-demand network (e.g., a PIN) which only lasts for a short period of operational time (e.g., a party night for a small number of hours). All devices can only be connected to the created on-demand network during this operational time and will be disconnected afterwards.

Such on-demand network (a PIN), that is described in TR 22.859, may be considered as a small private network but in a small scale, and can be deployed faster and more dynamically.

The 3GPP SA1 also has started another study on providing on-demand localized services in TR 22.844 (3GPP Study on Providing Access in Localized Services), which is hereby incorporated herein by reference in its entirety, allowing UEs to access a local network for certain hosted services for a short period time. This local network can be also an on-demand short-lived network.

With these two studies, a new type of on-demand private network which can be created to offer certain specific services is defined, namely the Personal IoT Network (PIN). Once the PIN has been created and selected by the UEs, new mechanisms are also needed for UEs to be quickly and automatically authenticated and authorized in order to start enjoying services from that network. Authentication of the UE refers to verifying the identity and authenticity of the UE cryptographically. Authorization of the UE refers to validating that the authenticated UE is allowed or authorized to access a particular subscribed service being requested. For example, if a UE has subscribed to a voice only service, the UE would not be allowed or authorized to access other services such as a data service.

In the scenarios for the on-demand network comprising the on-demand network (e.g., a PIN), the UEs or devices that are going to access the services offered by the PIN may or may not belong to the same network operator. In order to allow access to the on-demand network, these UEs or devices (collectively called UEs for the remainder of this disclosure) would be required to be authenticated and authorized by on-demand network (e.g., the PIN). At least one UE (referred to herein as the host UE) from the group of UEs accessing the on-demand network belongs to the operator of the on-demand network and can be easily authenticated and authorized (e.g. using the credential already provisioned (i.e., k in the universal integrated circuit card (UICC) or subscriber identity module (SIM) card)). But, for other UEs that do not belong to the operator of the on-demand network, currently there are no mechanisms available that would allow those UEs to be provisioned with access credentials for accessing the on-demand network, to be authenticated and to be authorized by the on-demand network. The terms PIN and on-demand network may be used interchangeably throughout the this disclosure.

Currently, only the UE that belongs to the operator of the on-demand network has a valid user subscription. As a result, there is a common credential (i.e., the long term key in UICC) that is shared with the operator of the on-demand network. Leveraging the credential that is already shared with the operator of the on-demand network, the UE can be authenticated and authorized for on-demand network access. However, in many use cases that are supported by the on-demand network, many UEs that need to access the on-demand network are unlikely to belong to the same operator as the on-demand network. So, the current techniques are insufficient. Requiring only UEs belonging to the same operator that operates the on-demand network to be able to obtain access to the on-demand network would be too restrictive, inflexible, and undesirable.

Examples in this disclosure provide various methods and apparatus that allow the UEs that do not belong to the operator of the on-demand network to be provisioned with access credentials, authenticated and authorized for the purpose of accessing the on-demand network.

In examples, access credentials are provisioned into the UEs that will be accessing the on-demand network. The access credentials are used by the UEs and the on-demand network for authenticating and authorizing the UEs.

The examples include the UEs receiving a set of access credential(s) for accessing the PIN and the UEs being authenticated and authorized during the initial access to the PIN.

Additional examples include the setting of a "closed" group on-demand network (e.g., a PIN set up exclusively for the users who are in close proximity or are in line-of-sight and the access credentials are sent directly to the UEs by the PLMN that sets up the PIN). The authorization may be implicit by way of the UEs having obtained access credentials.

### On-demand network access credentials

Each UE requires an on-demand network access credential in order to access the on-demand network. The on-demand access credential may be used for authenticating and authorizing the UE for accessing the on-demand network. The on-demand access credential may be an one-time use credential or a multi-use credential. When the credential is multi-use, the credential may have a life time associated with the credential, or the credential may have a counter associated with the credential (which keeps a count each time the access credential is used, for example). The access credentials may take various formats, such as a shared key (e.g., the long term key stored in the UICC of a UE and in the network that is used for authentication in 3GPP networks), a public-private key pair, a certificate (e.g., X.509 certificate), or a token. Because UEs with access credentials may require authentication by different entities, depending on the format of the access credentials and how the access credentials are provisioned, the access credentials may also contain network routing information, for example, as part of the prefix or as a domain so that when authentication is not done locally, the authentication information can be properly routed back to the entity that provisioned the access credential.

The access credentials may also contain other identifiers that can be used in aiding the identification of the access credential (e.g., when multiple credentials are provisioned at the same time), or aiding the identification of specific use (e.g., when the credentials are created for a specific on-demand network). Each access credential may be unique to a UE (i.e., access credentials are not shared among the UEs in an on-demand network). So, when a UE uses its access credential for accessing the on-demand network, the UE can be uniquely identified. Unique identification of UE in most cases, may be required to comply with regional or local regulatory requirements, such as lawful interception.

### UE home network provided access credentials

According to some examples, a UE that does not belong to the operator that operates the on-demand network may obtain an one-time access credential directly from the UE's home operator in order to access the on-demand network (e.g., the PIN), where the operator of the on-demand network has a business agreement with the home operator of the UE. Without a business agreement between the UE's home operator and the on-demand network's operator, these access credentials would not be useful to either the home operator or to the on-demand network. The UE's home operator and the on-demand network's operator may have a business arrangement (e.g., roaming agreement) that allows the UE to access the on-demand network using credentials securely sent to the UE by the UE's home operator. Because the UE and its home operator are mutually authenticated, and security association is set up as a result of the successful authentication (i.e., normal network access and authentication process), any subsequent communication (i.e., sending access credential for accessing a PIN) between the UE and its home operator is secured. The access credential can be provisioned to the UE from the UE's home network before or during the time when UE is in the coverage of the on-demand network (e.g., PIN) by enhancing the control messages, such as the "UE parameter Update" message or "UE configuration update" message defined by TS23.501 with new credential information defined by this example embodiment for the on-demand network; or by other existing security container exchange messaged defined by 3GPP between UE and the network.

### On-demand network provided access credentials

According to some examples, the on-demand network's operator creates the on-demand network (e.g., the PIN), along with a set of unique access credentials for each UE to access the on-demand network. UE information including the access credential information may be provided by the host UE to other UEs during the creation of the on-demand network (e.g., the PIN). For example, using a template for the creation of the PIN, the host UE inputs the another UE's information (e.g., the another UE's identifier, email, etc.). Once the on-demand network has been created, the on-demand network may send information about the access credential, for example, an access token, or a link to the access credential (e.g., an https link to a secure server using SMS, email or the like) to the UE that has been input in the template. Alternatively, the on-demand network, based on UE identity information provided by the UE during the network registration phase, identifies the UE in the information template during the on-demand network creation then provisions the access credential to the UE with the enhancement of existing non-public network (NPN) provision mechanism defined in TS23.501, TS23.502 (which are both hereby incorporated herein by reference in their entirety). Alternatively, the on-demand network can also download a scan code to the host UE so that the UE can obtain from the host UE the information about the access credential such as the access credential or a link to the access credential (e.g., a https link to a secure server where the access credential can be securely downloaded to the UE).

### Application server provided access credentials

According to some examples, because the UEs accessing the on-demand network are to share something in common (e.g. accessing the same application server, such as a game server), the application server may provide access credentials to a UEs when the UE registers to access the application for the first time, for example.

The application server may also provide the access credential to the unified data management (UDM) of the home network of the UE with the enhancement of met work exposure function (NEF) exposure functionality of external parameter provisioning, then allow the home network of the UE to provision the credential to the UE via enhanced UE configuration update message or UE parameter update message (e.g., new one time credential information).

### Third party entity provided access credentials:

According to some examples, a third-party entity (e.g., a federated identity management (FIM) server, a Certificate Authority in a Public Key Infrastructure, etc.) may provide the access credentials for the UEs to use in obtaining access to the on-demand network. The credentials provided by the third-party entity can be used for a variety of applications as long as the applications or services that have business relations with the third-party entity. In a FIM system to which both a first application (Application A) and a second application (Application B) belong, a user can authenticate to the first application and then access resources in the second application without having to perform a separate login or authentication process for the second application. For example, the UE may use a single-signon to eliminate the need for inputting identity or authentication information again for the second application.

Alternatively, the third-party entity may provide access credentials that are based on a group of UEs (e.g., a group of UEs that are anticipated to participate in a group session such as the use case of several UEs coming together for accessing an on-demand network in TR 22.859). The group-based access credential may contain a group identifier (ID) that identifies the group. It may be possible for UEs in possession of group-based access credentials to access any serving network's on-demand network without incurring roaming charges or access charges provided that the third-party entity and the serving network have prior arrangements or service agreements that the access credential provided to the UEs are for accessing the on-demand network. An advantage of having a third-party entity access credentials is that the third-party entity is oblivious of the serving network that will provide access to the UEs.

### UE authenticating and authorizing using access credentials

The authentication and authorization occurring during initial access request using access credential may be between the UE and the UE's home network, between UE and an application function, or between the UE and a third-party entity. In these cases, the on-demand network has no way of knowing what access credentials the UEs have because the access credentials are not provided by the on-demand network. The access credentials (e.g., shared keys) are not shared between the UE and the on-demand network. This authentication and authorization is then conveyed to the on-demand network to indicate that the UE has been verified and validated, both security-wise and service-authorization-wise.

Based on the examples described above, the on-demand network's operator can use several options in authenticating and authorizing the access credentials of the UE.

In the examples where the UE home network provides the access credentials with the UE's home network operator having a business arrangement with the on-demand network operator, when the UE presents the access credential to the on-demand network during initial access, the on-demand network may request that the UE's home network operator verify the access credential. The on-demand network may use the routing information provided by the UE (e.g., an identifier that contains the network routing information such as in a subscription permanent identifier (SUPI)) to locate the UE's home network operator and route the request to the UE's home network operator. Upon successful verification and validation (i.e., authenticating and authorizing the UE), the on-demand network may grant access to the UE.

In the examples where the on-demand network provides the access credential to the UE based on input from the template that is used to create the on-demand network, when the UE presents the access credential to the on-demand network, the on-demand network directly verifies and validates the UE to grant the UE access. Optionally, the on-demand network may consider UEs having the access credential as a form of implicit authentication.

In the examples where the application server provides the access credentials to the UE, when the UE presents the access credential to the on-demand network during initial access, the on-demand network may request that the application server verifies the access credential. There may be several ways where the on-demand network can identify the application server, such as including an application identifier as part of the access credential, or by routing information (e.g., a domain as part of the access credential). Upon successful verification and validation, the on-demand network may grant access to the UE.

In the examples where a third-party entity provides the access credentials to the UE, when the UE presents the access credential to the on-demand network during initial access, the on-demand network may request that the third-party entity verifies the access credential. There may be several ways where the on-demand network can identify the third party entity, such as an identifier or indicator as part of the access credentials, or by routing information (e.g., a domain as part of the access credential), or by default configuration (e.g., a default third party entity that is specifically configured for providing access credential for the on-demand network). Upon successful verification and validation, the on-demand network may grant access to the UE.

### Authorizing the UE at the on-demand network

The on-demand network (e.g., the PIN), in some cases, contains resources (e.g., licensed spectrum) that is provided by the on-demand network's operator, where the on-demand network operator is ultimately responsible for ensuring that the use of the resources allocated for the on-demand network complies of any regulatory or regional requirements. For example, if the on-demand network's operator's spectrum license usage only covers the state of California, any usage of such spectrum outside of the state of California would constitute a violation of the FCC licensing agreement and would subject the operator to penalties, such as fines or licensing revocation. Therefore, the on-demand network's operator is responsible for authenticating and authorizing the UEs that access the resources at the on-demand network. While the authentication of the UE used for verifying the UE's identity and the authorization of the UE used for verifying the service subscription (e.g., the UE is authorized to access services provided by a serving network's on-demand network) may occur between the UE and the home network (or an entity that can provide authentication and authorization to the serving network, such as an application function or a third-party entity) as described above, the additional or second-level authorization may be performed by the on-demand network.

The second level authorization may be implicit if the on-demand network considers that the UE being authenticated and authorized by the home network (or application function) is sufficient. Otherwise, the on-demand network may perform the second-level authorization explicitly. Such explicit authorization may involve, for example, checking and verifying that the UE is a compliant UE based on the UE's capabilities, such as the model number, the built version, or other characteristics of the UE. An example of a non-compliant UE may be, for example, a UE that has its transmission power set to above a threshold that is allowed by the FCC.

In some scenarios where the spectrum allocated for use by the on-demand network is not licensed, (e.g., using non-license spectrum for 5G new radio unlicensed (NR-U), or using wireless fidelity (Wi-Fi)), the on-demand network may still maintain the administrative aspect of the on-demand network. So, the second-level authorization may still be required for interference management and congestion control (e.g., in order to instruct UE to switch between license and unlicensed spectrum).

### Authentication and Authorization with access credentials provided by the UE's home network

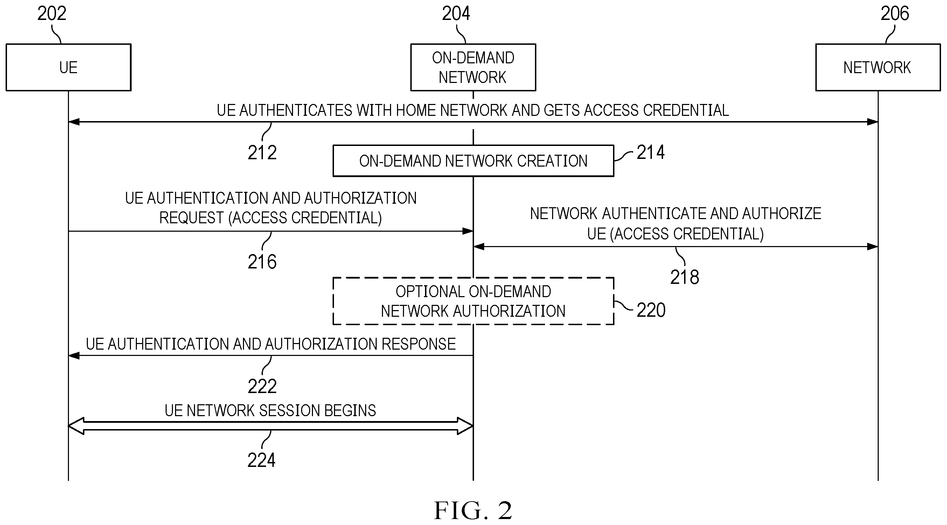

FIG. 2 illustrates a message flow of access credential provisioning, authentication, and authorization by the UE's home network operated by the UE's home operator, according to some examples. As shown in FIG. 2, the network 206 is the home network of the UE 202 operated by the home operator of the UE 202. The serving network of the on-demand network 204 may be the home network of the UE 202 (the network 206) or may be another network operated by another operator different from the home operator of the UE 202.

At operation 212, while the UE 202 is in the network coverage of the home network 206, the network 206 and the UE 202 perform primary authentication (e.g., as part of normal access and security setup procedures between the UE 202 and its home network 206), and establish the secure connection. The network 206 may send the access credentials to the UE 202 in a secure message. The network 206 may send the access credential to the UE 202 at operation 212 (e.g., upon the primary authentication) before the on-demand network 204 is created.

At operation 214, the on-demand network 204 is created by the serving network of the on-demand network 204.

At operation 216, the UE 202 requests access to the on-demand network 204 by providing information about the access credential (e.g., the whole or part of the access credential, the access credential identifier, or other additional information for identifying the access credential) obtained during operation 212.

At operation 218, the on-demand network 204, based on the routing information provided by the UE 202 (e.g., the routing information may be part of the access credential or the UE identity), contacts the UE 202's home network 206 to verify the access credential. The home network 206 is able to confirm the UE 202's access credential as well as the UE 202's service subscription. Based on the confirmation received from the home network 206, the on-demand network 204 authenticates and authorizes the UE 202 for accessing the on-demand network 204.

Optionally, at operation 220, the on-demand network 204 may perform the second level of authorization as described above (e.g., checking the UE 202's capability or compliance) for the UE 202 to access the resources in the on-demand network 204.

At operation 222, the on-demand network 204 responds to the UE 202 to confirm the authentication and authorization.

At operation 224, the UE 202 starts the session with the on-demand network 204. If there are other UEs accessing the on-demand network 204, the other UEs may also start sessions with the on-demand network 204. Then, UEs in the on-demand network 204 may also start communications over the PC5 interfaces among themselves, either individually or as a group.

### Authentication and Authorization with access credential provided by the on-demand network

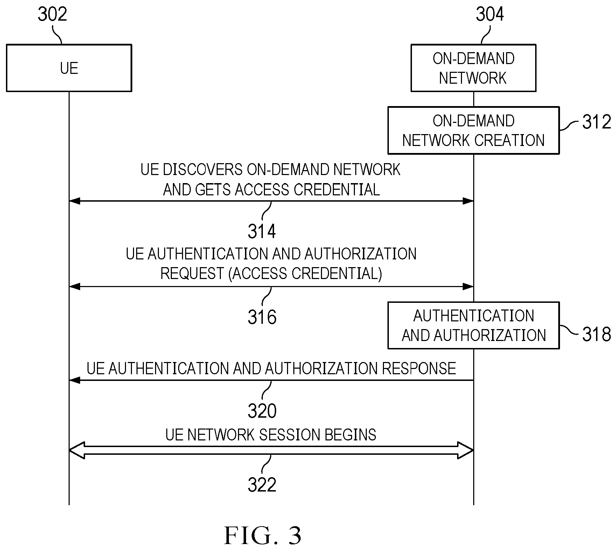

FIG. 3 illustrates a message flow of access credential provisioning, authentication, and authorization by the on-demand network, according to some examples. As shown in FIG. 3, the serving network of the on-demand network 304 may or may not belong to the home network of the UE 302 operated by the home operator of the UE 302.

At operation 312, the on-demand network 304 is created by the serving network of the on-demand network 304. The UE 302's identity may be pre-provisioned in the on-demand network 304 creation template. The serving network of the on-demand network 304 may or may not belong to the home network of the UE 302.

At operation 314, the UE 302 discovers the on-demand network 304. The UE 302 receives the access credential (e.g., an access token) from the on-demand network 304 (e.g., using a QR code created by the on-demand network 304 or via SMS/email, or the like, sent by the on-demand network 304).

At operation 316, the UE 302 requests access to the on-demand network 304 by providing information about the access credential (e.g., the whole or part of the access credential, the access credential identifier, or other additional information to identifying the access credential) obtained at operation 314.

At operation 318, the on-demand network 304 authenticates and authorizes the UE 302 for accessing the on-demand network 304.

At operation 320, the on-demand network 304 responds to the UE 302 to confirm authentication and authorization.

At operation 322, the UE 302 starts the session with the on-demand network 304. If there are other UEs accessing the on-demand network 304, the other UEs start session with the on-demand network 304. Then, the UEs in the on-demand network 304 may also start communications over the PC5 interfaces among themselves, either individually or as a group.

### Authentication and Authorization with access credentials provided by the application server

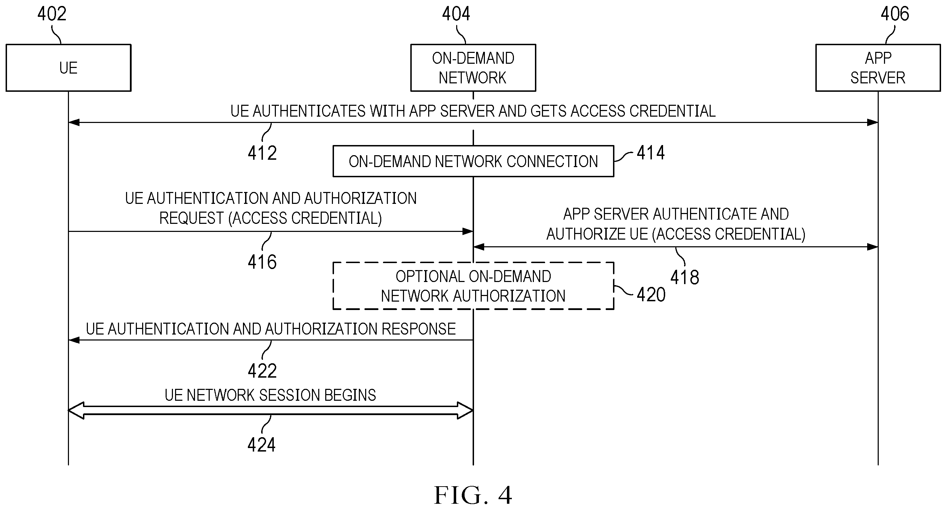

FIG. 4 illustrates a message flow of access credential provisioning, authentication, and authorization by the application server, according to some examples. As shown in FIG. 4, the serving network of the on-demand network 404 may or may not belong to the home network of the UE 402 operated by the home operator of the UE 402 .

At operation 412, while the UE 402 is in the network coverage of the home network of the UE 402, the application server 406 authenticates the UE 402 and establishes a secure channel (e.g., TLS connection) with the UE 402. The application server 406 provides the access credential for use in the on-demand network 404 to the UE 402 in the secure channel after authentication. The application server 406 may require prior UE registration in order to authenticate the UE 402. The application server 406 may send the access credential to the UE 402 at operation 412 (e.g., upon the authentication of the UE 402 by the application server 406) before the on-demand network 404 is created.

At operation 414, the on-demand network 404 is created by the serving network of on-demand network 404.

At operation 416, the UE 402 requests access to the on-demand network 404 by providing the access credential (e.g., the whole or part of the access credential, the access credential identifier, or other additional information for identifying the access credential) obtained during operation 412.

At operation 418, the on-demand network 404, based on the routing information provided by the UE 402 (e.g., the routing information may be part of the access credential, or the UE identity, or part of the default application that the UE 402 intends to access while accessing the on-demand network 404), contacts the application server 406 to verify the access credential. The application server 406 is able to confirm the UE 404's access credential as well as the UE 404's service subscription. Based on the confirmation received from the application server 406, the on-demand network 404 authenticates and authorizes the UE 402 for accessing the on-demand network 404.

Optionally, at operation 420, the on-demand network 404 may perform the second level of authorization as described above (e.g., checking the UE 402's capability or compliance) for the UE 402 to access the resources in the on-demand network 404.

At operation 422, the on-demand network 404 responds to the UE 402 to confirm authentication and authorization.

At operation 424, the UE 402 starts the session with the on-demand network 404. If there are other UEs accessing the on-demand network 404, the other UEs may also start sessions with the on-demand network 404. Then, UEs in the on-demand network 404 may also start communications over the PC5 interfaces among themselves, either individually or as a group.

Authentication and Authorization with access credentials provided by the third party entity.

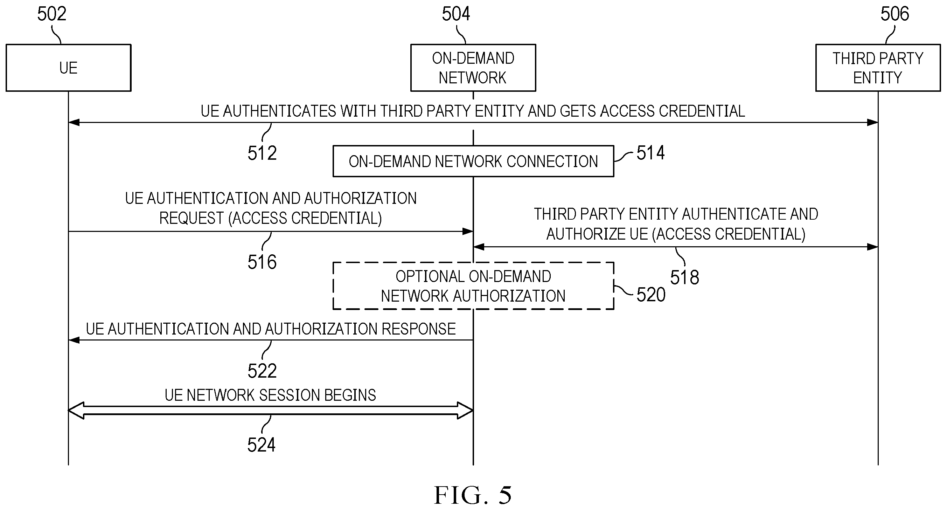

FIG. 5 illustrates a message flow of access credential provisioning, authentication, and authorization by the third party entity, according to some examples. As shown in FIG. 5, the serving network of the on-demand network 504 may or may not belong to the home network of the UE 502 operated by the home operator of the UE 502.

At operation 512, while the UE 502 is in the network coverage of the home network of the UE 502, the third party entity 506 authenticates the UE 502 and establishes a secure channel (e.g., a TLS connection). The third party entity 506 provides access credential for use in the on-demand network 504 to the UE 502 over the secure channel after authentication. The third party entity 506 may require prior UE registration in order to authenticate the UE 502.

At operation 514, the on-demand network 504 is created by the serving network of on-demand network 504.

At operation 516, the UE 502 requests access to the on-demand network 504 by providing the access credentials (e.g., the whole or part of the access credential, the access credential identifier, or other additional information for identifying the access credential) obtained during operation 512.

At operation 518, the on-demand network 504, based on the routing information provided by the UE 502 (e.g., routing may be part of the access credential, the UE identity, or may be part of the default application that the UE 502 intends to access while accessing the on-demand network 504), contacts the third party entity 506 to verify the access credentials. The third party entity 506 is able to confirm the UE 502's access credential as well as the UE 502's service subscription. Based on the confirmation received from the third party entity 506, the on-demand network 504 authenticates and authorizes the UE 504 for accessing the on-demand network 504.

Optionally, at operation 520, the on-demand network 504 may perform the second level of authorization as described above (e.g., checking the UE 502's capability or compliance) for the UE 502 to access the resources in the on-demand network 504.

At operation 522, the on-demand network responds to the UE 502 to confirm authentication and authorization.

At operation 522, the UE 502 starts the session with the on-demand network 504. If there are other UEs accessing the on-demand network 504, the other UEs start sessions with the on-demand network 504. Then, the UEs in the on-demand network 504 may also start communications over the PC5 interfaces among themselves, either individually or as a group.

In the usage scenarios for the on-demand network (e.g., the PIN), the UEs that are to be accessing the services offered by the on-demand network may be provisioned with access credentials before or during accessing the on-demand network, using techniques such as the examples techniques described above. In the process of accessing the on-demand network, the UEs may also present the provisioned access credential to the on-demand network for authentication and authorization, and if successful, the UEs are then granted access to the on-demand network.

During normal initial network access, the UEs and the network (e.g., the on-demand network or the UE home network) perform authentication and authorization in order for the UEs to be granted access to communicate with the on-demand network and to communicate among UEs in the on-demand network. Subsequent communications may include communication between the UEs and the on-demand network, communication among the UEs as a group, or between two UEs (e.g., using a PC5 interface). These communications are expected to be securely protected (e.g., encrypted or integrity-protected or both). In order to protect these communications, data encryption and data integrity protection over the communication channels may be used. Data encryption provide privacy protection of the data so that only the intended receiver of the data with the same encryption key can recover the data (e.g., using a symmetric key cipher algorithm such as the algorithm used in Advanced Encryption Standards (AES)). Data integrity protection provides integrity of the data in that the receiver of the data is ensured that the data has not been modified in transit. The protection of these communications requires security keys to be shared between the UEs and the on-demand network, between two communicating UEs, or among a group of UEs communicating as a group.

Currently, there is no on-demand network (such as a PIN) that supports a UE from a different operator than the operator of the on-demand network to communicate securely with the on-demand network or communicate with other UEs in the on-demand network. There are roaming solutions that allow UEs from different operators to communicate securely with a serving on-demand network (e.g., a PIN) that is different from the UE's home operator. However, in this case, the UE obtains the keys (e.g., cipher key and integrity key) as a result of executing an authentication and key agreement protocol with the serving network of the on-demand network and the UE's home network, which involves an exchange of signaling with the UE's home network authentication server. If the UE wishes to communicate with another UE accessing the same on-demand network using, for example, device-to-device direct communication over the PC5 interface, the current authentication and key agreement protocol does not support such key generation and distribution. Additionally, the UE is expected to incur roaming charges. In the on-demand network, the UE, even if it is from an operator different from the one that is operating the on-demand network, is not expected to incur roaming charges while communicating through the on-demand network or communicating with the UEs that are accessing the same on-demand network.

Access credentials provisioned for authentication and authorization may belong to the on-demand network, a UE's home network, an application server, or a third party entity, as described above. Authentication and Key Agreement (i.e., 5G-AKA or EAP-AKA) protocols currently used in 5G (and prior) do not work well when access credentials may not be uniform as in the pre-shared secret (in the form of a 128-bit or 256-bit key shared between the network (e.g., the UE's home network) and the UE's UICC or SIM card). Access credentials issued by entities other than the UE's home network is also problematic for having a key generation and distribution mechanism using the current authentication and key agreement scheme specified in 3GPP to support 5G or LTE.

A Bluetooth-based solution for generating and distributing keys to UEs may not work well for on-demand networks, either. Bluetooth security based on a user entering a passcode for security is subject to man-in-the-middle attack. There are more secure versions of Bluetooth, but these versions require more procedures involved, such as using a camera-enabled UE to scan something (e.g., an image generated and displayed on the face of a smart watch). Also, these more secured versions of Bluetooth require even more user input or intervention.

Even the secured versions of Bluetooth are not sufficient in providing group keys for more than one UE or may require considerable effort when there is more than one UE.

Furthermore, as explained above, the UEs in the on-demand network may or may not belong to the same network operator as the on-demand network. In order to allow these UEs access to the on-demand network, the UEs to need to be authenticated and authorized by the on-demand network. While at least one UE (e.g., the host UE) from the group belongs to the operator of the on-demand network and can be easily authenticated and authorized, for the other UEs that do not belong to the operator of the on-demand network, there are no current mechanisms available that would allow those UEs to be authenticated and authorized by the on-demand network.

Currently, only the UE that belongs to the operator has a valid user subscription, and as a result, there is a common credential is shared with that operator. Leveraging the credential that is already shared with the operator, the UE may be authenticated and authorized for the on-demand network access. However, in many use cases that are supported by the on-demand network, many UEs desiring access are unlikely to belong to the operator and thus making it unlikely that the current solutions would suffice.

In addition, relying on roaming or Bluetooth is also not scalable for allowing UEs to be quickly set up in the on-demand network, especially when the number of UEs is large, making the solution not optimal or inefficient.

This disclosure provides various examples methods and apparatus that allow the UEs that do not belong to the same operator of the on-demand network to communicate securely.

In some examples, access credentials are assumed to be provisioned into the UEs that will be accessing the on-demand network, as described above. The access credentials are used by the UEs and the on-demand network for authenticating and authorizing the UEs. After the authentication and authorization of the UEs for accessing the on-demand network, all UEs would have established security association (e.g., security keys for ciphering and integrity protection) for secure communication.

In some examples, two or more sets of keys are provided to the UE after the UE authentication and authorization for accessing the on-demand network. Each set of keys may contain a cipher key (e.g., CK) and an integrity key (e.g., IK) to protect privacy and authenticity of the data. Each set of keys may be different.

In some examples, the UEs may receive a set of shared keys to be used for communicating between the UE and the on-demand network and a set of common keys (e.g. group keys) to be used for communicating between UEs accessing the on-demand network.

### Key set description

In some examples, in the scenario of the UEs accessing services and resources provided by the on-demand network, at least two sets of keys may be used in order to protect the communications between UEs and the on-demand network as well as between the UEs themselves. Each key set contains one or more cipher keys (e.g., CK) that are used to encrypt the communication (e.g., control plane or user plane data) and one or more matching integrity keys (e.g., IK) that are used to integrity-protect or integrity-validate the communication. When the key set contains more than one matching pair of cipher and integrity keys, each key pair (e.g., CK and IK) may be used for protecting one specific type of communication, for example, one key pair is used for protecting the control plane data and another key pair is used for protecting the user plane data.

For the protection of communication between the UEs and the on-demand network, each UE and the on-demand network may use a set of shared keys (e.g., UE-to-Network Keys) shared between the UE and the on-demand network. The set of shared keys may include one or more pairs of a cipher key and an integrity key, and are used to confidentiality-protect and integrity-protect the communication between the network and the UE respectively. The set of shared keys is unique for each UE that wishes to communicate with the network and is not shared with other UEs.

For the protection of communication between and among the UEs accessing the on-demand network, a set of common keys (e.g., Network Group Keys) is used. The set of common keys may include a cipher key and an integrity key, used to confidentiality-protect and integrity-protect the communication (e.g., over the PC5 interface) among the UEs in accessing the on-demand network. Keys that are used in this type of communication are also commonly known as group keys.

It may also be possible to generate a third set of keys (e.g., UE-to-UE Keys) that can be used between only two UEs in the on-demand network communicating with each other, for example two UEs communicating using a direct communication method, such as PC5. This set of keys is different from the set of common keys (e.g., Network Group Keys) that is used for group communication among the UEs in the on-demand network. For the duration of the present disclosure, it is assumed that generation and distribution of the third set of keys can be similar to that of generation and distribution of the set of common keys.

The two or three sets of keys must be different, for the purpose of protecting each communication with a different key.

### Generating the shared keys using access credential

When the UE wishes to access the on-demand network, the UE presents its access credential to be authenticated and authorized by the on-demand network. The on-demand network authenticates the UE by validating the credential presented by the UE. There are a number of ways regarding how the UE presents the access credential to the on-demand network and there are a number of ways regarding how the access credential is validated, depending on how the UE's access credential is provisioned and what form the access credential takes. For example, the UE may present an identifier associated with a particular access credential to the on-demand network so that the access credential is not exposed over-the-air. The entity (e.g., the UE's home network, an application server, or an external third-party entity such as a FIM server) that validates the UE may then look up the UE's access credential based on the identifier (e.g., in a look-up table of access credentials indexed by the access credential identifier). Each access credential may be used only once, for the duration of the on-demand network, or for a duration specified to the UE when the UE is provisioned with the information about the access credential.

The on-demand network may use the access credential and additional parameters (e.g., a random number, the on-demand network's identifier (e.g., PIN identifier), the UE's identifier, etc.) to derive a set of shared keys. In some examples, if the on-demand network receives only an identifier of the access credential from the UE, the on-demand network may obtain the entire access credential from the entity that validates the UE (e.g., the UE's home network, the on-demand network, the application server, or the third party entity). The set of shared keys (e.g., UE-to-Network Keys) may include one or more pairs of a cipher key or an integrity key. In some examples, the on-demand network, as part of confirming authentication and authorization to the UE, may send variable part of the parameters (e.g., the random number) that was used to generate the shared keys to the UE. The UE then may derive the same keys as in the on-demand network using the same parameters (e.g., access credential, random number, the on-demand network's identifier, UE identifier, etc.) to the same key derivation functions (KDFs). For example, the key derivation functions may be the KDFs defined in Annex B.2.0 of TS 33.220.

### Generating the shared keys randomly

The network may also generate the shared keys randomly, for example, using a pseudo random number generator (PRNG) function. In this case, the network may be the on-demand network, the UE's home network, an application server, or a third party entity. In this alternative, the set of shared keys (e.g., UE-to-Network Keys) may be sent to the UE.

### Generating the common keys

The network generates a set of common keys (e.g., Network Group Keys used for group communication or used in direct communication between UEs) using any of the key generating methods described above, for example, using a PRNG function. In some examples, the binding of the keys to a specific use such as for group communication may be desirable. When key binding is used, additional parameter(s), such as the group identifier, the on-demand network's identifier, the location identifier, or other parameter specific to the use of the keys, may also be part of the input into the PRNG function. The set of common keys may be sent to the UE(s).

### Distributing the keys

For security reasons, it may be desirable to use the access credentials for deriving the set of shared keys between the UE and the on-demand network. Sending the shared keys over-the-air without protection risks man-in-the-middle attackers listening to the key exchange messages and intercepting the keys.

For the set of keys that are generated by the on-demand network, e.g., the set of shared keys generated without using the access credentials or the set of common keys generated by the on-demand network, the keys need to be sent securely to the UE.

When the set of shared keys are generated by the on-demand network without the access credentials, the on-demand network may use a public-private key scheme to protect the key distribution, for example. The on-demand network may use the public key of the UE in the public-private key pair to encrypt the set of shared keys (e.g., UE-to-Network Keys) and send the encrypted set of shared keys to the UE. The public key of the UE may be sent to the on-demand network as part of the UE presenting its access credential to the on-demand network during authentication and authorization by the on-demand network. The UE may use the private key of its public-private key pair to decrypt the set of shared keys. The set of common keys (e.g., Network Group Keys) can also be sent to the UE by the network using this embodiment technique.

In some examples, when the set of shared keys (e.g., UE-to-Network Keys) is available, sending the set of common keys may be protected between each UE and the on-demand network by using the set of shared keys. Using the set of shared keys to protect the set of common keys has the advantage that symmetric cryptographic operations are more efficient than public-key cryptographic operations. On the other hand, if public-key scheme is being used for sending the set of shared keys, sending the set of common keys in the same key distribution protocol is more efficient than sending each set of keys separately.

In some examples, the message exchanges in support of authentication and authorization may be enhanced to support the distribution of keys during initial access between the UE and the on-demand network.

### Refreshing keys

When the UE session with the on-demand network exceeds a certain threshold (e.g., the period of time has expired, the amount of data exchanged exceeds a pre-defined value, or the count of the access credential usages exceeds a threshold value), the key sets (e.g., UE-to-Network Keys, Network Group Keys, or UE-to-UE Keys) in the UEs may be refreshed. Key sets to be refreshed include the key set (cipher and integrity keys) used between UE and the on-demand network, the key set (cipher and integrity keys) used among UEs for group communication, and optionally the key set (cipher and integrity key) used between UEs (e.g., for communication over PC5 interface). The key refresh may be performed either by the on-demand network re-generating the new key sets and sending to the UEs securely using the key set that is about to expire. The key refresh may also be performed by the on-demand network sending a fresh parameter (e.g., a random number or a nonce) to the UEs so that the UEs can compute new key sets using the fresh parameter and the current, about to expire keys, as input.

### The on-demand network key generation and distribution

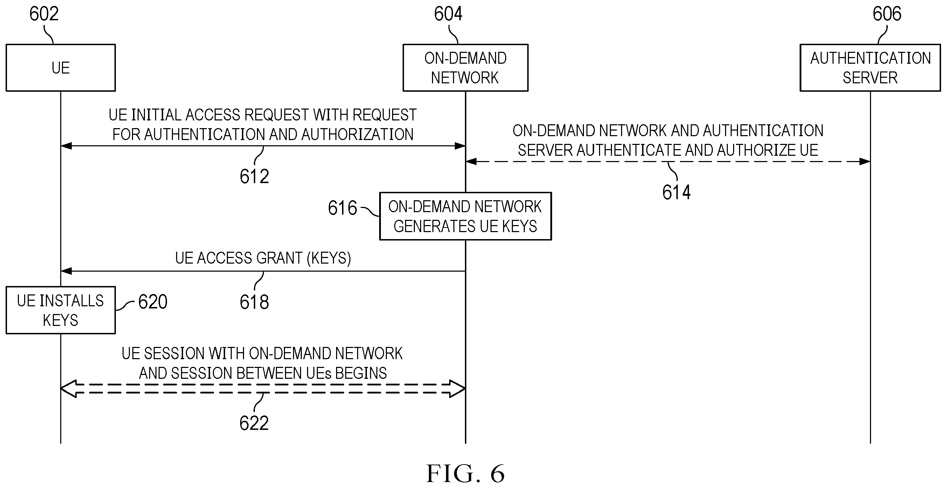

FIG. 6 illustrates a message flow of the on-demand network key generation and distribution, according to some examples. In FIG. 6, the authentication server 606 may be the home network of the UE 602 (e.g., the home network 206 in FIG. 2), an application server (e.g., the application server 406 in FIG. 4), or a third-party entity (e.g., the third-party entity 506 in FIG. 5). In some examples, the on-demand network 604 may perform the authentication and authorization without contacting a authentication server, and the authentication server 606 may not be needed.

At operation 612, the UE 602 requests initial access to the on-demand network 604. The initial access request may also include an authentication and authorization request, using the previously obtained access credential, as described above with respect to FIGs. 2-5. Depending on the key generation and distribution scheme used, the initial access may also include the UE 602's identity, access credential identifier, the UE 602's public key, and any other parameter (e.g., the UE 202's generated random number) that is used for key generation.

At operation 614, depending on the type of access credential to be used for authentication and authorization, the on-demand network 604 may contact the authentication server 606 (e.g., the UE 602's home network, an application server, or the third-party entity as described with respect to FIGs. 2 and 4-5 ). The authentication server authenticates and authorizes the UE 602 for the on-demand network, using techniques described with respect to FIGs. 2 and 4-5. In some examples, the on-demand network 604 may perform the authentication and authorization using the techniques as described with respect to FIG. 3, and the authentication server 606 may not be needed.

At operation 616, the on-demand network 604 prepares the key set(s) for the UE 602. Depending on the key generation method used, in some examples, operation 616 may include generating a network random number, and combining the UE 602's random number, the network's random number, the access credentials, and/or part of the access credentials to input into a key generation function. In some examples, operation 616 may also include generating all of the required key set(s) for the UE.

At operation 618, the on-demand network 604 may grant access to the UE 602 in an access grant message. Depending on the key generation method used, the access grant message may include the partial set(s) of keys, the complete set(s) of keys, or a parameter needed by the UE 602 to generate the set(s) of keys by the UE 602. Also depending on the method used to protect the keys being sent to the UE 602, information in the access grant message may be protected using public key encryption (e.g., using the UE 602's public key that was previously sent to the on-demand network 604 as part of the UE 602's initial access request at operation 612).

At operation 620, the UE 602 is able to either construct the keys from information in the access grant message, or retrieve the keys in the access grant message, depending on the key generation method and the protection of the message at operation 618. For example, if the information in the access grant message is encrypted using the UE 602's public key, the UE 602 may decrypt the information in the access grant message.

At operation 622, the communication sessions may begin for UEs in the on-demand network 604. The communication sessions may include the UE 602 starting communications with the on-demand network 604, another UE (not shown in FIG. 6) in the on-demand network 604 starting communication with the on-demand network, and the UE 602 and the another UE start communicating with each other. If there are more than two UEs in the on-demand network 604 in the session, the group communication among the UEs in the same group may also start.

### The on-demand network key refresh using network generated keys

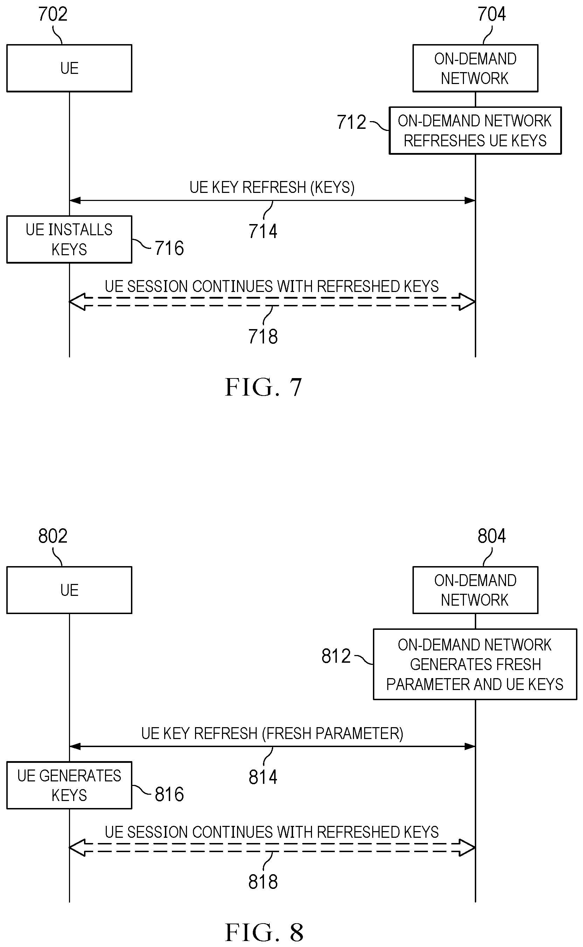

FIG. 7 illustrates a message flow for an on-demand network key refresh using network generated keys, according to some examples.

At operation 712, the on-demand network 704 determines that key sets for the UE 702 need to be refreshed. The on-demand network 704 may generate the UE 702's key sets, including cipher and integrity keys for communicating with the on-demand network 704, cipher and integrity keys for communicating with other UEs in the group, and optionally cipher and integrity keys for communicating with other UEs (e.g., over the PC5 interface).

At operation 714, the on-demand network 704 send the key sets to the UE 702 in a key refresh message. The key refresh message may be protected using the cipher and integrity keys from the current key set (e.g., UE-to-Network Keys) that is used for protecting communication between the UE 702 and the on-demand network 704.

At operation 716, the UE 702 receives the key sets from the on-demand network, and marks the received key sets as being in use and obsoletes the old key sets.

At operation 718, the UE 702 may continue current session(s) with the on-demand network 704 or with other UE(s).

### The on-demand network key refresh using keys generated by UE

FIG. 8 illustrates a message flow for an on-demand network key refresh using keys generated by the UE, according to some examples.

At operation 812: the on-demand network 804 determines that the UE 802's key sets need to be refreshed. The on-demand network 804 may generate a fresh parameter (e.g., random number, nonce, etc.). Additionally, the on-demand network 804 may generate the UE 802's key sets, including cipher and integrity keys for communicating with the on-demand network 804, cipher and integrity keys for communicating with other UEs in the group, and optionally cipher and integrity keys for communicating with other UEs (e.g., over the PC5 interface).

At operation 814, the on-demand network 804 may the fresh parameter (rather than the generated new key sets) to the UE 802 in a key refresh message. The key refresh message is protected using the cipher and integrity keys from the current key set (e.g., UE-to-Network Keys) that is used for protecting communication between the UE 802 and the on-demand network 804.

At operation 816, the UE 802 receives the fresh parameter in the key refresh message from the on-demand network 804, and uses the fresh parameter as the input. Along with the current keys, the UE 802 may generate the new key sets, including cipher and integrity keys for communicating with the on-demand network 804, cipher and integrity keys for communicating with other UEs in the group, and optionally cipher and integrity keys for communicating with other UEs (e.g., over PC5 interface). The UE 802 marks the newly key sets in use and obsoletes the old key sets.

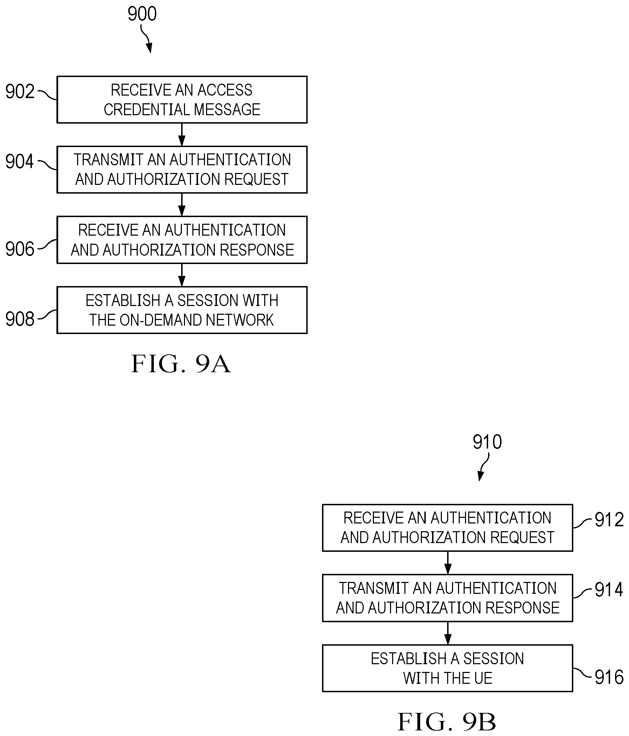

FIG. 9A illustrates a flowchart of a method 900 for access credential provisioning, authentication, and authorization, according to some examples. The method 900 starts at operations 902, where a user equipment (UE) receives an access credential message, The access credential message indicates an access credential for an on-demand network for the UE to access. The access credential message further indicates a limited lifespan of the access credential. At operation 904, the UE transmits, to the on-demand network, an authentication and authorization request. The authentication and authorization request includes information about the access credential. At operation 906, the UE receives, from the on-demand network, an authentication and authorization response. At operation 908, the UE establishes a session with the on-demand network based on the authentication and authorization response.

In some examples, the on-demand network may belong to an operator different from a home operator of the UE. In some examples, the access credential message may further include entity information indicating one or more entities performing authentication and authorization. The authentication and authorization request may include the entity information. In some examples, the one or more entities may include at least one of an entity of the on-demand network, an application server whose one or more services are used by UEs via accessing the on-demand network, a third party entity, or an entity of a home network of the UE. In some examples, the entity information may indicate a first entity processing the authentication and a second entity processing the authorization. The second entity may be different from the first entity. In some examples, the access credential message may further indicate a credential type and a credential owner. The credential owner may be one of the on-demand network, an application server whose one or more services are used by UEs via accessing the on-demand network, a third party entity, or a home network of the UE. In some examples, the UE may receive the access credential message in response to the UE authenticating with a home network of the UE or the UE authenticating with an application server whose one or more services are used by UEs via accessing the on-demand network. The UE may receive the access credential message before or during the UE accessing to the on-demand network. In some examples, the UE may receive the access credential message from a home network of the UE or from an application server whose one or more services are used by UEs via accessing the on-demand network without the UE requesting to obtain the information about the access credential to access the on-demand network. In some examples, the UE may receive the access credential message from a home network of the UE or from an application server whose one or more services are used by UEs via accessing the on-demand network with the UE requesting to obtain the information about the access credential to access the on-demand network. In some examples, the information about the access credential may include the access credential or an identifier of the access credential.

FIG. 9B illustrates a flowchart of a method 910 for access credential provisioning, authentication, and authorization, according to some examples. The method 910 starts at operations 912, where a network entity of an on-demand network receives an authentication and authorization request including information about an access credential. The UE receives an access credential message indicating the access credential for the on-demand network for the UE to access. The access credential message further indicates a limited lifespan of the access credential. At operation 914, the network entity transmits to the UE an authentication and authorization response. At operation 916, the network entity establishes a session with the UE based on the authentication and authorization response.

In some examples, the on-demand network may belong to an operator different from a home operator of the UE. In some examples, the access credential message may further include entity information indicating one or more entities performing authentication and authorization. The authentication and authorization request may include the entity information. In some examples, the one or more entities may include at least one of the entity of the on-demand network, an application server whose one or more services are used by UEs via accessing the on-demand network, a third party entity, or an entity of a home network of the UE. In some examples, the entity information may indicate a first entity processing the authentication and a second entity processing the authorization. The second entity may be different from the first entity. In some examples, the access credential message may further indicate a credential type and a credential owner. The credential owner may be one of the on-demand network, an application server whose one or more services are used by UEs via accessing the on-demand network, a third party entity, or a home network of the UE. In some examples, the UE may receive the access credential message in response to the UE authenticating with a home network of the UE or the UE authenticating with an application server whose one or more services are used by UEs via accessing the on-demand network. The UE may receive the access credential message before or during the UE accessing to the on-demand network. In some examples, the UE may receive the access credential message from a home network of the UE or from an application server whose one or more services are used by UEs via accessing the on-demand network without the UE requesting to obtain the information about the access credential to access the on-demand network. In some examples, the UE may receive the access credential message from a home network of the UE or from an application server whose one or more services are used by UEs via accessing the on-demand network with the UE requesting to obtain the information about the access credential to access the on-demand network. In some examples, the information about the access credential may include the access credential or an identifier of the access credential.

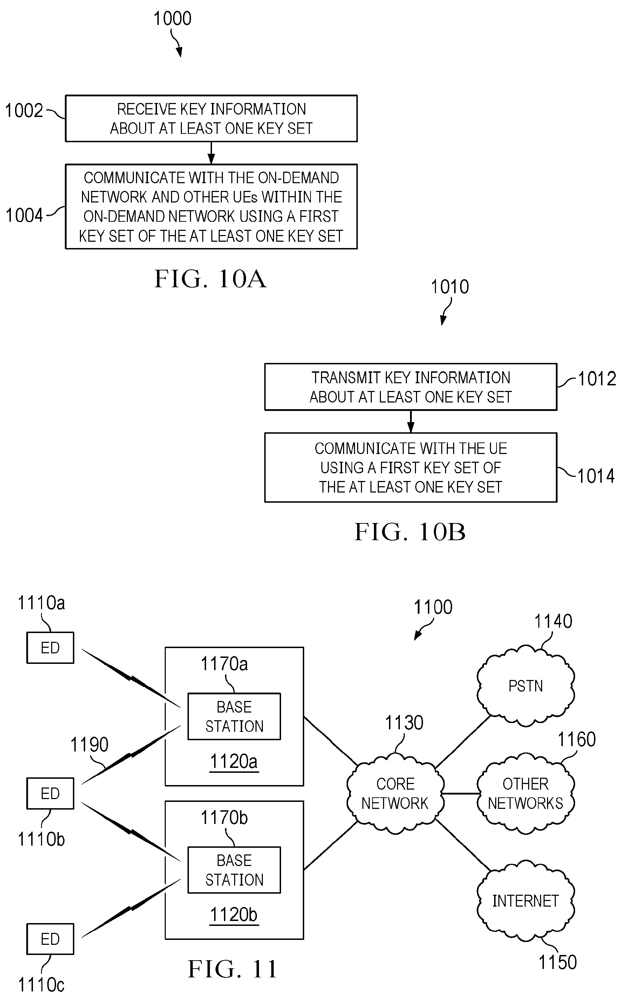

FIG. 10A illustrates a flowchart of a method 1000 for the on-demand network key generation and distribution, according to some examples. The method 1000 starts at operations 1002, where a user equipment (UE) receives, from an on-demand network, key information about at least one key set. The at least one key set is generated based on information of the on-demand network and an access credential used by the UE to access the on-demand network and an access credential used by the UE to access the on-demand network. The at least one key set may comprise a first key set, and the first key set may comprise a first key pair including a first cipher key (CK) and a first integrity key (IK). At operation 1004, the UE communicates with the on-demand network and other UEs within the on-demand network using the first key set.

In some examples, the on-demand network may belong to an operator different from a home operator of the UE. In some examples, the key information about the at least one key set may include the at least one key set, or the key information about the at least one key set may include at least one parameter used by the UE to generate the at least one key set. In some examples, the at least one parameter may include parameters for the UE to generate a new fresh key, the parameters include a random number generated by the on-demand network as a nonce. In some examples, a public key may be provided by the on-demand network, a home network of the UE, or an application server whose one or more services are used by UEs via accessing the on-demand network. In some examples, the at least one parameter may include a limited lifespan of the at least one key set. The limited lifespan may include at least one of a start time or an end time. In some examples, the UE may send a refresh request to the on-demand network before receiving a refresh message. In some examples, the key information may further indicate a limited lifespan of the at least one key set. In some examples, the first key pair in the first key set may be used by the UE to communicate with a control plane of the on-demand network. The first key set may further comprise a second key pair including a second CK and a second IK used by the UE to communicate with a data plane of the on-demand network. In some examples, the at least one key set may further comprise a third key set including a third CK and a third IK used by the UE for group communications within the on-demand network, the third key set being group specific. The at least one key set further comprising a fourth key set including a fourth CK and a fourth IK used by the UE to communicate with a second UE in the on-demand network. In some examples, the UE may receive a key refresh message including refresh information for refreshing the at least one key set. The key refresh message may be encrypted and integrity checked using the first key set. The key refresh message may include at least one new key set, or the key refresh message may include at least one refresh parameter for the UE generate the at least one new key set. The UE may communicate with the on-demand network using the at least one new key set. In some examples, before receiving the key information, the UE may transmit to the on-demand network an authentication and authorization request including information about the access credential. The authentication and authorization request may further include a public key of the UE. The key information about the at least one key set may be encrypted by the on-demand network using the public key. The UE may decrypt the key information about the at least one key set using a private key of the UE.

FIG. 10B illustrates a flowchart of a method 1010 for the on-demand network key generation and distribution, according to some examples. The method 1010 starts at operations 1012, where a network entity of an on-demand network transmits to a user equipment (UE) key information about at least one key set. The at least one key set is generated based on information of the on-demand network and an access credential used by the UE to access the on-demand network and an access credential used by the UE to access the on-demand network. The at least one key set may comprise a first key set, and the first key set may comprise a first key pair including a first cipher key (CK) and a first integrity key (IK). At operation 1014, the network entity communicates with the UE using the first key set.

In some examples, the on-demand network may belong to an operator different from a home operator of the UE. In some examples, the key information about the at least one key set may include the at least one key set, or the key information about the at least one key set may include at least one parameter used by the UE to generate the at least one key set. In some examples, the at least one parameter may include parameters for the UE to generate a new fresh key, the parameters include a random number generated by the on-demand network as a nonce. In some examples, a public key may be provided by the on-demand network, a home network of the UE, or an application server whose one or more services are used by UEs via accessing the on-demand network. In some examples, the at least one parameter may include a limited lifespan of the at least one key set. The limited lifespan may include at least one of a start time or an end time. In some examples, the UE may send a refresh request to the on-demand network before receiving a refresh message. In some examples, the key information may further indicate a limited lifespan of the at least one key set. In some examples, the first key pair in the first key set may be used by the UE to communicate with a control plane of the on-demand network. The first key set may further comprise a second key pair including a second CK and a second IK used by the UE to communicate with a data plane of the on-demand network. In some examples, the at least one key set may further comprise a third key set including a third CK and a third IK used by the UE for group communications within the on-demand network, the third key set being group specific. The at least one key set further comprising a fourth key set including a fourth CK and a fourth IK used by the UE to communicate with a second UE in the on-demand network. In some examples, the UE may receive a key refresh message including refresh information for refreshing the at least one key set. The key refresh message may be encrypted and integrity checked using the first key set. The key refresh message may include at least one new key set, or the key refresh message may include at least one refresh parameter for the UE generate the at least one new key set. The UE may communicate with the on-demand network using the at least one new key set. In some examples, before receiving the key information, the UE may transmit to the on-demand network an authentication and authorization request including information about the access credential. The authentication and authorization request may further include a public key of the UE. The key information about the at least one key set may be encrypted by the on-demand network using the public key. The UE may decrypt the key information about the at least one key set using a private key of the UE.

FIG. 11 illustrates an example communication system 1100. In general, the system 1100 enables multiple wireless or wired users to transmit and receive data and other content. The system 1100 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 1100 includes electronic devices (ED) 1110a-1110c, radio access networks (RANs) 1120a-1120b, a core network 1130, a public switched telephone network (PSTN) 1140, the Internet 1150, and other networks 1160. While certain numbers of these components or elements are shown in FIG. 11, any number of these components or elements may be included in the system 1100.

The EDs 1110a-1110c are configured to operate or communicate in the system 1100. For example, the EDs 1110a-1110c are configured to transmit or receive via wireless or wired communication channels. Each ED 1110a-1110c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 1120a-1120b here include base stations 1170a-1170b, respectively. Each base station 1170a-1170b is configured to wirelessly interface with one or more of the EDs 1110a-1110c to enable access to the core network 1130, the PSTN 1140, the Internet 1150, or the other networks 1160. For example, the base stations 1170a-1170b may include (or be) one or more of several well-known devices, such as a base transceiver station (BTS), a Node-B (NodeB), an evolved NodeB (eNodeB), a Next Generation (NG) NodeB (gNB), a Home NodeB, a Home eNodeB, a site controller, an access point (AP), or a wireless router. The EDs 1110a-1110c are configured to interface and communicate with the Internet 1150 and may access the core network 1130, the PSTN 1140, or the other networks 1160.

In the embodiment shown in FIG. 11, the base station 1170a forms part of the RAN 1120a, which may include other base stations, elements, or devices. Also, the base station 1170b forms part of the RAN 1120b, which may include other base stations, elements, or devices. Each base station 1170a-1170b operates to transmit or receive wireless signals within a particular geographic region or area, sometimes referred to as a "cell." In some examples, multiple-input multiple-output (MIMO) technology may be employed having multiple transceivers for each cell.

The base stations 1170a-1170b communicate with one or more of the EDs 1110a-1110c over one or more air interfaces 1190 using wireless communication links. The air interfaces 1190 may utilize any suitable radio access technology.

It is contemplated that the system 1100 may use multiple channel access functionality, including such schemes as described above. In particular examples, the base stations and EDs implement 5G New Radio (NR), LTE, LTE-A, or LTE-B. Of course, other multiple access schemes and wireless protocols may be utilized.

The RANs 1120a-1120b are in communication with the core network 1130 to provide the EDs 1110a-1110c with voice, data, application, Voice over Internet Protocol (VoIP), or other services. Understandably, the RANs 1120a-1120b or the core network 1130 may be in direct or indirect communication with one or more other RANs (not shown). The core network 1130 may also serve as a gateway access for other networks (such as the PSTN 1140, the Internet 1150, and the other networks 1160). In addition, some or all of the EDs 1110a-1110c may include functionality for communicating with different wireless networks over different wireless links using different wireless technologies or protocols. Instead of wireless communication (or in addition thereto), the EDs may communicate via wired communication channels to a service provider or switch (not shown), and to the Internet 1150.

Although FIG. 11 illustrates one example of a communication system, various changes may be made to FIG. 11. For example, the communication system 1100 could include any number of EDs, base stations, networks, or other components in any suitable.

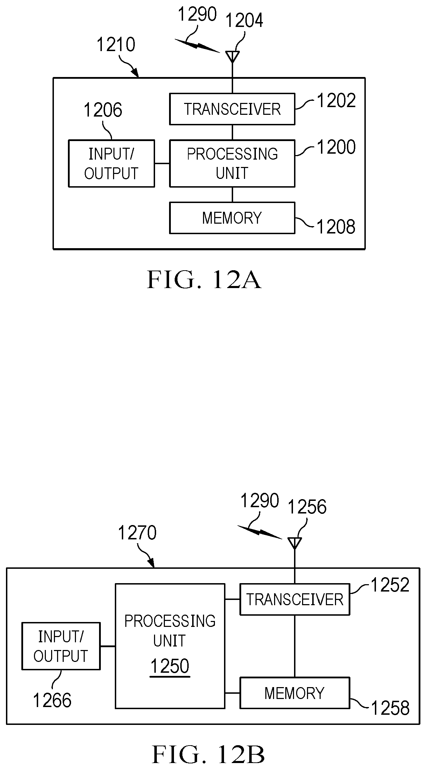

FIG. 12A and 12B illustrate example devices that may implement the methods and teachings according to this disclosure. In particular, FIG. 12A illustrates an example ED 1210, and FIG. 12B illustrates an example base station 1270. These components could be used in the system 1100 or in any other suitable system.

As shown in FIG. 12A the ED 1210 includes at least one processing unit 1200. The processing unit 1200 implements various processing operations of the ED 1210. For example, the processing unit 1200 could perform signal coding, data processing, power control, input/output processing, or any other functionality enabling the ED 1210 to operate in the system 1100. The processing unit 1200 also supports the methods and teachings described in more detail above. Each processing unit 1200 includes any suitable processing or computing device configured to perform one or more operations. Each processing unit 1200 could, for example, include a microprocessor, microcontroller, digital signal processor, field programmable gate array, or application specific integrated circuit.

The ED 1210 also includes at least one transceiver 1202. The transceiver 1202 is configured to modulate data or other content for transmission by at least one antenna or NIC (Network Interface Controller) 1204. The transceiver 1202 is also configured to demodulate data or other content received by the at least one antenna 1204. Each transceiver 1202 includes any suitable structure for generating signals for wireless or wired transmission or processing signals received wirelessly or by wire. Each antenna 1204 includes any suitable structure for transmitting or receiving wireless or wired signals. One or multiple transceivers 1202 could be used in the ED 1210, and one or multiple antennas 1204 could be used in the ED 1210. Although shown as a single functional unit, a transceiver 1202 could also be implemented using at least one transmitter and at least one separate receiver.

The ED 1210 further includes one or more input/output devices 1206 or interfaces (such as a wired interface to the Internet 1150). The input/output devices 1206 facilitate interaction with a user or other devices (network communications) in the network. Each input/output device 1206 includes any suitable structure for providing information to or receiving information from a user, such as a speaker, microphone, keypad, keyboard, display, or touch screen, including network interface communications.

In addition, the ED 1210 includes at least one memory 1208. The memory 1208 stores instructions and data used, generated, or collected by the ED 1210. For example, the memory 1208 could store software or firmware instructions executed by the processing unit(s) 1200 and data used to reduce or eliminate interference in incoming signals. Each memory 1208 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIG. 12B, the base station 1270 includes at least one processing unit 1250, at least one transceiver 1252, which includes functionality for a transmitter and a receiver, one or more antennas 1256, at least one memory 1258, and one or more input/output devices or interfaces 1266. A scheduler, which would be understood by one skilled in the art, is coupled to the processing unit 1250. The scheduler could be included within or operated separately from the base station 1270. The processing unit 1250 implements various processing operations of the base station 1270, such as signal coding, data processing, power control, input/output processing, or any other functionality. The processing unit 1250 can also support the methods and teachings described in more detail above. Each processing unit 1250 includes any suitable processing or computing device configured to perform one or more operations. Each processing unit 1250 could, for example, include a microprocessor, microcontroller, digital signal processor, field programmable gate array, or application specific integrated circuit.

Each transceiver 1252 includes any suitable structure for generating signals for wireless or wired transmission to one or more EDs or other devices. Each transceiver 1252 further includes any suitable structure for processing signals received wirelessly or by wire from one or more EDs or other devices. Although shown combined as a transceiver 1252, a transmitter and a receiver could be separate components. Each antenna 1256 includes any suitable structure for transmitting or receiving wireless or wired signals. While a common antenna 1256 is shown here as being coupled to the transceiver 1252, one or more antennas 1256 could be coupled to the transceiver(s) 1252, allowing separate antennas 1256 to be coupled to the transmitter and the receiver if equipped as separate components. Each memory 1258 includes any suitable volatile or non-volatile storage and retrieval device(s). Each input/output device 1266 facilitates interaction with a user or other devices (network communications) in the network. Each input/output device 1266 includes any suitable structure for providing information to or receiving/providing information from a user, including network interface communications.

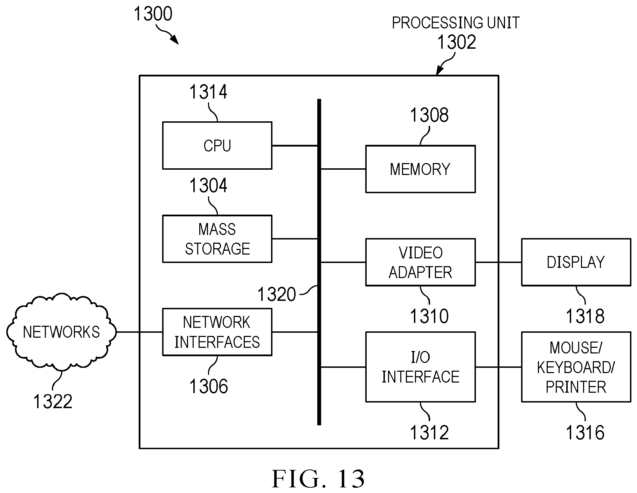

FIG. 13 is a block diagram of a computing system 1300 that may be used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1300 includes a processing unit 1302. The processing unit includes a central processing unit (CPU) 1314, memory 1308, and may further include a mass storage device 1304, a video adapter 1310, and an I/O interface 1312 connected to a bus 1320.

The bus 1320 may be one or more of any type of several bus architectures including a memory bus or memory controller, a peripheral bus, or a video bus. The CPU 1314 may comprise any type of electronic data processor. The memory 1308 may comprise any type of non-transitory system memory such as static random access memory (SRAM), dynamic random access memory (DRAM), synchronous DRAM (SDRAM), read-only memory (ROM), or a combination thereof. In an embodiment, the memory 1308 may include ROM for use at boot-up, and DRAM for program and data storage for use while executing programs.

The mass storage 1304 may comprise any type of non-transitory storage device configured to store data, programs, and other information and to make the data, programs, and other information accessible via the bus 1320. The mass storage 1304 may comprise, for example, one or more of a solid state drive, hard disk drive, a magnetic disk drive, or an optical disk drive.

The video adapter 1310 and the I/O interface 1312 provide interfaces to couple external input and output devices to the processing unit 1302. As illustrated, examples of input and output devices include a display 1318 coupled to the video adapter 1310 and a mouse, keyboard, or printer 1316 coupled to the I/O interface 1312. Other devices may be coupled to the processing unit 1302, and additional or fewer interface cards may be utilized. For example, a serial interface such as Universal Serial Bus (USB) (not shown) may be used to provide an interface for an external device.

The processing unit 1302 also includes one or more network interfaces 1306, which may comprise wired links, such as an Ethernet cable, or wireless links to access nodes or different networks. The network interfaces 1306 allow the processing unit 1302 to communicate with remote units via the networks. For example, the network interfaces 1306 may provide wireless communication via one or more transmitters/transmit antennas and one or more receivers/receive antennas. In an embodiment, the processing unit 1302 is coupled to a local-area network 1322 or a wide-area network for data processing and communications with remote devices, such as other processing units, the Internet, or remote storage facilities.

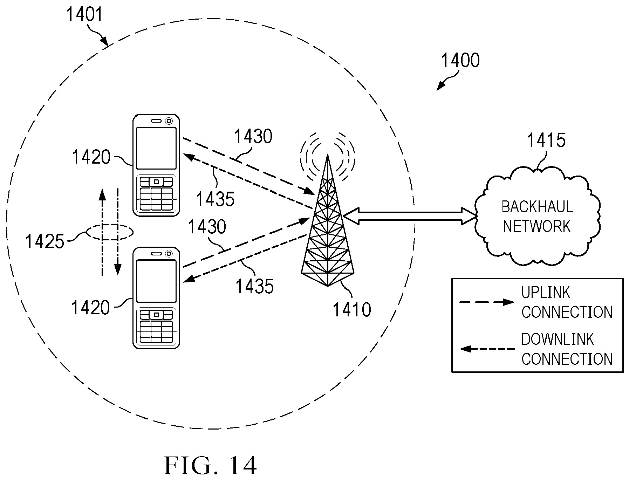

FIG. 14 illustrates an example communications system 1400, according to some examples. Communications system 1400 includes an access node 1410 serving user equipments (UEs) with coverage 1401, such as UEs 1420. In a first operating mode, communications to and from a UE passes through access node 1410 with a coverage area 1401. The access node 1410 is connected to a backhaul network 1415 for connecting to the internet, operations and management, and so forth. In a second operating mode, communications to and from a UE do not pass through access node 1410, however, access node 1410 typically allocates resources used by the UE to communicate when specific conditions are met. Communications between a pair of UEs 1420 can use a sidelink connection (shown as two separate one-way connections 1425). In FIG. 14, the sideline communication is occurring between two UEs operating inside of coverage area 1401. However, sidelink communications, in general, can occur when UEs 1420 are both outside coverage area 1401, both inside coverage area 1401, or one inside and the other outside coverage area 1401. Communication between a UE and access node pair occur over uni-directional communication links, where the communication links between the UE and the access node are referred to as uplinks 1430, and the communication links between the access node and UE is referred to as downlinks 1435.

Access nodes may also be commonly referred to as Node Bs, evolved Node Bs (eNBs), next generation (NG) Node Bs (gNBs), master eNBs (MeNBs), secondary eNBs (SeNBs), master gNBs (MgNBs), secondary gNBs (SgNBs), network controllers, control nodes, base stations, access points, transmission points (TPs), transmission-reception points (TRPs), cells, carriers, macro cells, femtocells, pico cells, and so on, while UEs may also be commonly referred to as mobile stations, mobiles, terminals, users, subscribers, stations, and the like. Access nodes may provide wireless access in accordance with one or more wireless communication protocols, e.g., the Third Generation Partnership Project (3GPP) long term evolution (LTE), LTE advanced (LTE-A), 5G, 5G LTE, 5G NR, sixth generation (6G), High Speed Packet Access (HSPA), the IEEE 802.11 family of standards, such as 802.11a/b/g/n/ac/ad/ax/ay/be, etc. While it is understood that communications systems may employ multiple access nodes capable of communicating with a number of UEs, only one access node and two UEs are illustrated for simplicity.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a selecting unit or module, a determining unit or module, or an assigning unit or module. The respective units or modules may be hardware, software, or a combination thereof. For instance, one or more of the units or modules may be an integrated circuit, such as field programmable gate arrays (FPGAs) or application-specific integrated circuits (ASICs).

## Claims

1. A method (900) comprising:
receiving (902), by a user equipment, UE, an access credential message, the access credential message indicating an access credential for an on-demand network for the UE to access, the access credential message further indicating a limited lifespan of the access credential;
transmitting (904), by the UE to the on-demand network, an authentication and authorization request including information about the access credential;
receiving (906), by the UE from the on-demand network, an authentication and authorization response; and
establishing (908), by the UE, a session with the on-demand network based on the authentication and authorization response.

2. The method (900) of claim 1, wherein the on-demand network belongs to an operator different from a home operator of the UE.

3. The method (900) of claim 1, wherein the access credential message further indicates a credential type and a credential owner, the credential owner being one of the on-demand network, an application server whose one or more services are used by UEs via accessing the on-demand network, a third party entity, or a home network of the UE.

4. The method (900) of claim 1, wherein the UE receives the access credential message in response to the UE authenticating with a home network of the UE or the UE authenticating with an application server whose one or more services are used by Ues via accessing the on-demand network, and wherein the UE receives the access credential message before or during the UE accessing to the on-demand network.

5. The method (900) of claim 1, wherein the UE receives the access credential message from a home network of the UE or from an application server whose one or more services are used by Ues via accessing the on-demand network without the UE requesting to obtain the information about the access credential to access the on-demand network.

6. The method (900) of any of claims 1-5, the information about the access credential including the access credential or an identifier of the access credential.

7. A method (910) comprising:
receiving (912), by a network entity of an on-demand network from a user equipment, UE, an authentication and authorization request including information about an access credential, wherein the UE receives an access credential message indicating the access credential for the on-demand network for the UE to access, the access credential message further indicating a limited lifespan of the access credential;
transmitting (914), by the network entity to the UE, an authentication and authorization response; and
establishing (916), by the network entity, a session with the UE based on the authentication and authorization response.

8. The method (910) of claim 7, wherein the on-demand network belongs to an operator different from a home operator of the UE.

9. The method (910) of claim 7, wherein the access credential message further includes entity information indicating one or more entities performing authentication and authorization, and wherein the authentication and authorization request includes the entity information.

10. The method (910) of claim 7, wherein the UE receives the access credential message in response to the UE authenticating with a home network of the UE or the UE authenticating with an application server whose one or more services are used by UEs via accessing the on-demand network, and wherein the UE receives the access credential message before or during the UE accessing to the on-demand network.

11. The method (910) of claim 7, wherein the UE receives the access credential message from a home network of the UE or from an application server whose one or more services are used by UEs via accessing the on-demand network without the UE requesting to obtain the information about the access credential to access the on-demand network.

12. The method (910) of claim 7, wherein the UE receives the access credential message from a home network of the UE or from an application server whose one or more services are used by UEs via accessing the on-demand network with the UE requesting to obtain the information about the access credential to access the on-demand network.

13. The method (910) of any of claims 7-12, the information about the access credential including the access credential or an identifier of the access credential.

14. A user equipment (1210), UE, comprising units configured to perform the method according to any one of claims 1-6.

15. A network entity (1270), comprising units configured to perform the method according to any one of claims 7-13.

## Patentansprüche

1. Verfahren (900), umfassend:
Empfangen (902) einer Zugriffsberechtigungsnachricht durch ein Benutzergerät (UE), wobei die Zugriffsberechtigungsnachricht eine Zugriffsberechtigung für ein On-Demand-Netzwerk angibt, auf das das UE zugreifen kann, wobei die Zugriffsberechtigungsnachricht ferner eine begrenzte Lebensdauer der Zugriffsberechtigung angibt;
Übertragen (904) einer Authentifizierungs- und Autorisierungsanforderung, beinhaltend Informationen über die Zugriffsberechtigung, an das On-Demand-Netzwerk durch das UE;
Empfangen (906) einer Authentifizierungs- und Autorisierungsantwort von dem On-Demand-Netzwerk durch das UE; und
Herstellen (908) einer Sitzung mit dem On-Demand-Netzwerk durch das UE basierend auf der Authentifizierungs- und Autorisierungsantwort.

2. Verfahren (900) nach Anspruch 1, wobei das On-Demand-Netzwerk zu einem anderen Betreiber als einem Heimbetreiber des UEs gehört.

3. Verfahren (900) nach Anspruch 1, wobei die Zugriffsberechtigungsnachricht ferner einen Berechtigungstyp und einen Berechtigungseigentümer angibt, wobei der Berechtigungseigentümer eines von dem On-Demand-Netzwerk, einem Anwendungsserver, dessen ein oder mehrere Dienste von UEen über ein Zugreifen auf das On-Demand-Netzwerk verwendet werden, einer Drittparteieneinheit oder einem Heimnetzwerk des UEs ist.

4. Verfahren (900) nach Anspruch 1, wobei das UE die Zugriffsberechtigungsnachricht als Reaktion auf ein Authentifizieren des UEs bei einem Heimnetzwerk des UEs oder ein Authentifizieren des UEs bei einem Anwendungsserver empfängt, dessen ein oder mehrere Dienste von UEen über ein Zugreifen auf das On-Demand-Netzwerk verwendet werden, und wobei das UE die Zugriffsberechtigungsnachricht vor oder während des Zugreifens des UEs auf das On-Demand-Netzwerk empfängt.

5. Verfahren (900) nach Anspruch 1, wobei das UE die Zugriffsberechtigungsnachricht von einem Heimnetzwerk des UEs oder von einem Anwendungsserver empfängt, dessen ein oder mehrere Dienste von UEen über ein Zugreifen auf das On-Demand-Netzwerk verwendet werden, ohne dass das UE anfordert, die Informationen über die Zugriffsberechtigung, um auf das On-Demand-Netzwerk zuzugreifen, zu erlangen.

6. Verfahren (900) nach einem der Ansprüche 1-5, wobei die Informationen über die Zugriffsberechtigung die Zugriffsberechtigung oder eine Kennung der Zugriffsberechtigung beinhalten.

7. Verfahren (910), umfassend:
Empfangen (912) einer Authentifizierungs- und Autorisierungsanforderung, beinhaltend Informationen über eine Zugriffsberechtigung, durch eine Netzwerkeinheit eines On-Demand-Netzwerks von einem Benutzergerät (UE), wobei das UE eine Zugriffsberechtigungsnachricht empfängt, die die Zugriffsberechtigung für das On-Demand-Netzwerk angibt, auf das das UE zugreifen kann, wobei die Zugriffsberechtigungsnachricht ferner eine begrenzte Lebensdauer der Zugriffsberechtigung angibt;
Übertragen (914) einer Authentifizierungs- und Autorisierungsantwort an das UE durch die Netzwerkeinheit; und
Herstellen (916) einer Sitzung mit dem UE durch die Netzwerkeinheit basierend auf der Authentifizierungs- und Autorisierungsantwort.

8. Verfahren (910) nach Anspruch 7, wobei das On-Demand-Netzwerk zu einem anderen Betreiber als einem Heimbetreiber des UEs gehört.

9. Verfahren (910) nach Anspruch 7, wobei die Zugriffsberechtigungsnachricht ferner Einheitsinformationen beinhaltet, die eine oder mehrere Einheiten angeben, die eine Authentifizierung und Autorisierung durchführen, und wobei die Authentifizierungs- und Autorisierungsanforderung die Einheitsinformationen beinhaltet.

10. Verfahren (910) nach Anspruch 7, wobei das UE die Zugriffsberechtigungsnachricht als Reaktion auf ein Authentifizieren des UEs bei einem Heimnetzwerk des UEs oder ein Authentifizieren des UEs bei einem Anwendungsserver empfängt, dessen ein oder mehrere Dienste von UEen über ein Zugreifen auf das On-Demand-Netzwerk verwendet werden, und wobei das UE die Zugriffsberechtigungsnachricht vor oder während des Zugreifens des UEs auf das On-Demand-Netzwerk empfängt.

11. Verfahren (910) nach Anspruch 7, wobei das UE die Zugriffsberechtigungsnachricht von einem Heimnetzwerk des UEs oder von einem Anwendungsserver empfängt, dessen ein oder mehrere Dienste von UEen über ein Zugreifen auf das On-Demand-Netzwerk verwendet werden, ohne dass das UE anfordert, die Informationen über die Zugriffsberechtigung, um auf das On-Demand-Netzwerk zuzugreifen, zu erlangen.

12. Verfahren (910) nach Anspruch 7, wobei das UE die Zugriffsberechtigungsnachricht von einem Heimnetzwerk des UEs oder von einem Anwendungsserver empfängt, dessen ein oder mehrere Dienste von UEen über ein Zugreifen auf das On-Demand-Netzwerk verwendet werden, wobei das UE anfordert, die Informationen über die Zugriffsberechtigung, um auf das On-Demand-Netzwerk zuzugreifen, zu erlangen.

13. Verfahren (910) nach einem der Ansprüche 7-12, wobei die Informationen über die Zugriffsberechtigung die Zugriffsberechtigung oder eine Kennung der Zugriffsberechtigung beinhalten.

14. Benutzergerät (1210) (UE), umfassend Einheiten, die konfiguriert sind, um das Verfahren nach einem der Ansprüche 1-6 durchzuführen.

15. Netzwerkeinheit (1270), umfassend Einheiten, die konfiguriert sind, um das Verfahren nach einem der Ansprüche 7-13 durchzuführen.

## Revendications

1. Procédé (900) comprenant :
la réception (902), par un équipement d'utilisateur, EU, d'un message d'identifiants d'accès, le message d'identifiants d'accès indiquant un identifiant d'accès pour un réseau à la demande auquel l'EU doit accéder, le message d'identifiants d'accès indiquant également une durée de vie limitée des identifiants d'accès ;
la transmission (904), par l'EU au réseau à la demande, d'une demande d'authentification et d'autorisation comportant des informations sur les identifiants d'accès ;
la réception (906), par l'EU en provenance du réseau à la demande, d'une réponse d'authentification et d'autorisation ; et
l'établissement (908), par l'EU, d'une session avec le réseau à la demande sur la base de la réponse d'authentification et d'autorisation.

2. Procédé (900) selon la revendication 1, dans lequel le réseau à la demande appartient à un opérateur différent d'un opérateur domestique de l'EU.

3. Procédé (900) selon la revendication 1, dans lequel le message d'identifiants d'accès indique également un type d'identifiants et un propriétaire d'identifiants, le propriétaire d'identifiants étant l'un parmi le réseau à la demande, un serveur d'application dont un ou plusieurs services sont utilisés par les EU par l'intermédiaire de l'accès au réseau à la demande, une entité tierce ou un réseau domestique de l'EU.

4. Procédé (900) selon la revendication 1, dans lequel l'EU reçoit le message d'identifiants d'accès en réponse à l'authentification de l'EU auprès d'un réseau domestique de l'EU ou à l'authentification de l'EU auprès d'un serveur d'application dont un ou plusieurs services sont utilisés par les EU par l'intermédiaire de l'accès au réseau à la demande, et dans lequel l'EU reçoit le message d'identifiants d'accès avant ou pendant l'accès de l'EU au réseau à la demande.

5. Procédé (900) selon la revendication 1, dans lequel l'EU reçoit le message d'identifiants d'accès depuis un réseau domestique de l'EU ou depuis un serveur d'application dont un ou plusieurs services sont utilisés par les EU par l'intermédiaire de l'accès au réseau à la demande sans que l'EU demande d'obtenir les informations sur les identifiants d'accès pour accéder au réseau à la demande.

6. Procédé (900) selon l'une quelconque des revendications 1 à 5, les informations sur les identifiants d'accès comportant les identifiants d'accès ou un identifiant des identifiants d'accès.

7. Procédé (910) comprenant :
la réception (912), par une entité réseau d'un réseau à la demande en provenance d'un équipement utilisateur, EU, d'une demande d'authentification et d'autorisation comportant des informations sur un identifiant d'accès, dans lequel l'EU reçoit un message d'identifiants d'accès indiquant l'identifiant d'accès pour le réseau à la demande auquel l'EU doit accéder, le message d'identifiants d'accès indiquant également une durée de vie limitée de l'identifiant d'accès ;
la transmission (914), par l'entité réseau à l'EU, d'une réponse d'authentification et d'autorisation ; et
l'établissement (916), par l'entité réseau, d'une session avec l'EU sur la base de la réponse d'authentification et d'autorisation.

8. Procédé (910) selon la revendication 7, dans lequel le réseau à la demande appartient à un opérateur différent d'un opérateur domestique de l'EU.

9. Procédé (910) selon la revendication 7, dans lequel le message d'identifiants d'accès comporte également des informations d'entité indiquant une ou plusieurs entités effectuant l'authentification et l'autorisation, et dans lequel la demande d'authentification et d'autorisation comporte les informations d'entité.

10. Procédé (910) selon la revendication 7, dans lequel l'EU reçoit le message d'identifiants d'accès en réponse à l'authentification de l'EU auprès d'un réseau domestique de l'EU ou à l'authentification de l'EU auprès d'un serveur d'application dont un ou plusieurs services sont utilisés par les EU par l'intermédiaire de l'accès au réseau à la demande, et dans lequel l'EU reçoit le message d'identifiants d'accès avant ou pendant l'accès de l'EU au réseau à la demande.

11. Procédé (910) selon la revendication 7, dans lequel l'EU reçoit le message d'identifiants d'accès depuis un réseau domestique de l'EU ou depuis un serveur d'application dont un ou plusieurs services sont utilisés par les EU par l'intermédiaire de l'accès au réseau à la demande sans que l'EU demande d'obtenir les informations sur les identifiants d'accès pour accéder au réseau à la demande.

12. Procédé (910) selon la revendication 7, dans lequel l'EU reçoit le message d'identifiants d'accès depuis un réseau domestique de l'EU ou depuis un serveur d'application dont un ou plusieurs services sont utilisés par les EU par l'intermédiaire de l'accès au réseau à la demande avec une demande de l'EU d'obtenir les informations sur les identifiants d'accès pour accéder au réseau à la demande.

13. Procédé (910) selon l'une quelconque des revendications 7 à 12, les informations sur les identifiants d'accès comportant les identifiants d'accès ou un identifiant des identifiants d'accès.

14. Équipement utilisateur (1210), EU, comprenant des unités configurées pour effectuer le procédé selon l'une quelconque des revendications 1 à 6.

15. Entité réseau (1270), comprenant des unités configurées pour effectuer le procédé selon l'une quelconque des revendications 7 à 13.
